# EUROPEAN PATENT APPLICATION

(11) **EP 1 505 504 A2**
(43) Date of publication of application: **09.02.2005**
(21) Application number: 03021756.6
(22) Date of filing: 25.09.2003
(51) Int. Cl.: G06F 11/08

(54) **Remote copy system**

(30) Priority: 04.08.2003 JP 2003205617
(71) Applicant: Hitachi, Ltd., Chiyoda-ku, Tokyo 101-8010 (JP)
(72) Inventor: Watanabe, Naoki, Hitachi, Ltd., Tokyo 100-8220 (JP)
(74) Representative: Strehl Schübel-Hopf & Partner

(57) **Abstract**

A first storage unit system (104a) and a second storage unit system (104b) are connected together via a third storage unit system (104c). When executing a remote copy process, the first storage unit system responds to a write request received from a computer (102a) to transmit to the third storage unit system a journal having write data and address information indicative of a storage position at which the write data is written and requests the third storage unit system to write the journal. The second storage unit system receives control information (107a) issued by the first storage unit system and including the storage position of the journal and on the basis of the control information, reads the journal from the third storage unit system. Then, the second storage unit system follows address information contained in the journal to write the write date contained in the journal to a disk (210b) inside the second storage unit system.

## Description

### BACKGROUND OF THE INVENTION

The present invention relates to a storage unit for storing data used by computers. Especially, this invention is concerned with a remote copy technique in which a storage subsystem incorporating a controller for transmission/reception of data to/from a computer and a disk device for storing data is interconnected to another storage subsystem existing at a location remotely distant from the storage subsystem and data is copied between the storage subsystems without routing through the computer so as to be duplicated.

A technique for asynchronous remote copy is available, according to which a storage unit (hereinafter referred to as a storage subsystem) receiving data from a general computer system, a server, a personal computer on a network or another host computer system (hereinafter referred to as a host) transfers the received data asynchronously to a second storage subsystem installed at a remote location while assuring the data sequence to permit the second storage subsystem to write-in the transferred data. Asynchronous transfer referred to herein means that after receiving data from the host and returning to the host a response informing that processing of the received data is completed, the first storage subsystem executes the data transfer to the second storage subsystem.

A technique for synchronous remote copy is also available, according to which synchronously with an update process of data between a host and a first storage subsystem connected thereto, data is transferred from the first storage subsystem to a second storage subsystem installed near the first storage subsystem or at a location remote therefrom. Synchronous transfer referred to herein means that after receiving data from the host and transferring the received data to the second storage subsystem, the first storage subsystem returns a response to the host. By using the synchronous remote copy technique, the data stored in the two storage subsystems can be made to be macroscopically consistent with each other and the data write-in sequence is also assured. It will be appreciated that even when the distance between the two storage subsystems is in excess of 100 km, copy based on the synchronous transfer can be achieved, provided that a suitable data transfer path is selected.

In addition, JP-A-2000-305856 and JP-A-2003-122509 disclose a technique for realizing duplication of data among three or more storage subsystems while assuring the sequence or order of data update by using synchronous remote copy and asynchronous remote copy in combination.

### SUMMARY OF THE INVENTION

In the prior arts, remote copy between respective two data storing bases (sites) is used plural times in combination to execute remote copy among n sites.

Accordingly, a copy of data must be held at each site and as a result, each site needs a memory capacity which is n times greater at the least than that in the case where each site does not execute the remote copy process, giving rise to extremely raised costs.

Further, every site needs a storage subsystem mounted with a remote copy program, so that a plurality of highly functional and expensive storage subsystems are required.

Because of necessity of monitoring/controlling the status of a plurality of pairs for remote copy throughout the n sites, management/control is sophisticated and development costs are increased.

Furthermore, since the process concerning remote copy burdens or loads heavily in general, an intermediate site positioned intermediately of primary and secondary sites and required to participate in execution of the remote copy process in cooperation with both the primary and secondary sites is loaded particularly heavily, with the result that the number of I/O's processible by a storage subsystem of the intermediate site is limited.

Accordingly, the advent of a more suitable technique for remote copy among n sites has been desired.

Under the circumstances, the applicant proposes a technique suitable for remote copy among n sites as below. More particularly, a first storage unit system and a second storage unit system are connected to each other through a third storage unit system. When executing a remote copy process, the first storage unit system responds to a write request received from a computer to transmit to the third storage unit system a journal having write data received from the computer and address information indicative of a storage position to which the write data is written, thereby writing the journal to the third storage unit system. The second storage unit system receives control information issued by the first storage unit system to read and acquire the journal from the third storage system on the basis of the control information. Then, the second storage unit system follows the address information contained in the journal to write the write data contained in the journal to a disk inside the second storage unit system.

Other objects, features and advantages of the invention will become apparent from the following description of the embodiments of the invention taken in conjunction with the accompanying drawings.

### BRIEF DESCRIPTION OF THE DRAWINGS

Fig. 1 is a block diagram showing a first embodiment of a data processing system according to the invention.
Fig. 2 is a block diagram showing an example of construction of a storage subsystem in the data processing system.
Fig. 3 is a diagram showing an example of a storage area owned by an intermediate storage subsystem.
Figs. 4A and 4B are diagrams showing examples of structure of data stored in the intermediate storage subsystem.
Fig. 5 is a diagram showing an example of protection data.
Fig. 6 is a diagram showing an example of configuration of information the intermediate storage subsystem has.
Fig. 7 is a diagram showing an example of structure of data of request.
Fig. 8 is a flowchart showing an example of a procedure for initialization.
Fig. 9 is a flowchart showing an example of an update process in a primary storage subsystem.
Fig. 10 is a flowchart showing an example of a control information update process.
Fig. 11 is a flowchart showing an example of a process executed in the primary storage subsystem in the event of the occurrence of a fault.
Fig. 12 is a flowchart showing an example of an update process in a secondary storage subsystem.
Fig. 13 is a flowchart showing an example of a process in the secondary storage subsystem in the event of the occurrence of a fault.
Fig. 14 is a flowchart showing an example of a resynchronization process.
Fig. 15 is a block diagram showing another embodiment of the data processing system according to the invention.
Fig. 16 is a block diagram showing still another embodiment of the data processing system according to the invention.
Fig. 17 is a block diagram showing still another embodiment of the data processing system according to the invention.
Fig. 18 is a block diagram showing yet still another embodiment of the data processing system according to the invention.

### DESCRIPTION OF THE EMBODIMENTS

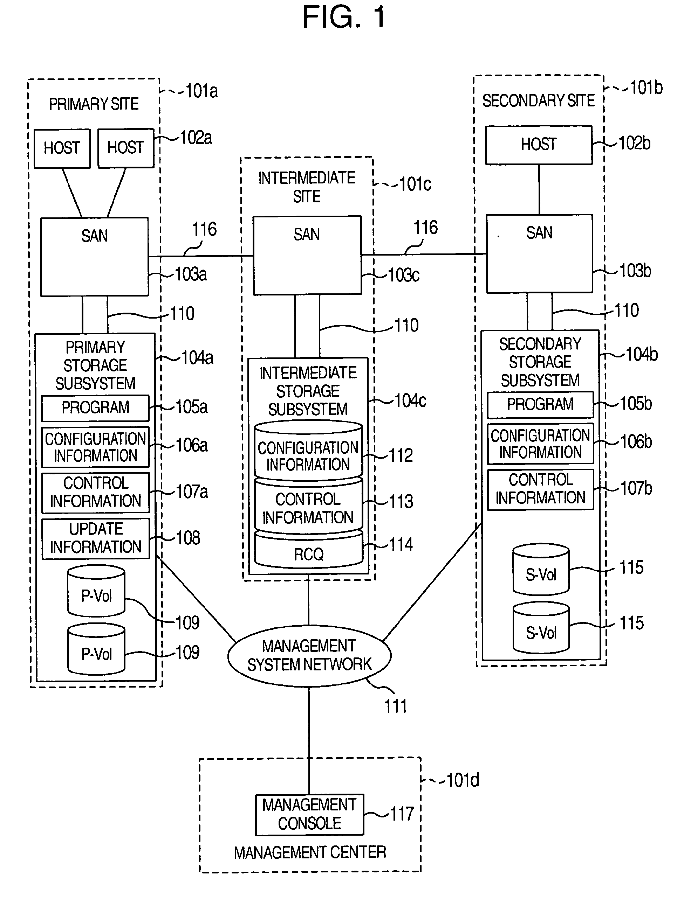

Referring now to Fig. 1, there is illustrated, in block diagram form, an example of construction of a data processing system (hereinafter also referred to as a remote copy system) according to a first embodiment of the invention. In the following description, "primary", "secondary" and "intermediate" will be discriminated from each other by reference suffixes "a", "b" and "c", respectively. In case the primary, secondary and intermediate need not be discriminated from each other, the suffixes a, b and c will sometimes be omitted.

The data processing system comprises a primary site 101a (hereinafter will sometimes be called a first site) including a primary host computer (hereinafter simply called a primary host or first host) 102a and a primary storage subsystem 104a (hereinafter will sometimes be called a first storage subsystem), a secondary site (hereinafter will sometimes be called a second site) 101b including a secondary host (hereinafter will sometimes be called a second host) 102b and a secondary storage subsystem (hereinafter will sometimes be called a second storage subsystem) 104b, and an intermediate site (hereinafter will sometimes be called a third site) 101c including an intermediate storage subsystem (hereinafter will sometimes be called a third storage subsystem) 104c.

In the present embodiment, the storage subsystem 104 will be described by way of example of a disk array device but the storage subsystem 104 is not limited particularly to the disk array device. Further, in each site 101, the host 102 and storage subsystem 104 are not limited particularly in number, provided that the number is one or more. Furthermore, each host 102 is such a computer as a workstation, microcomputer or mainframe computer.

The storage subsystem 104 has one or more interfaces 110 and is connected to the host 102 via a storage area network (SAN) 103. The interface 110 referred to herein is an interface adapted for storage unit, such as SCSI, fiber channel, FICON or ESCON and the kind of interface 110 and the construction of SAN 103 are not limited particularly. In the following description of the present embodiment, an instance will be described in which the fiber channel is used as interface 110.

The storage subsystems 104 present at different sites 101 are also connected to each other in a similar way through interface 110 (hereinafter, the interface used for connecting the storage subsystems 104 existing at different sites 101 will also be called a remote copy link 116).

The primary storage subsystem 104a and intermediate storage subsystem 104c may be arranged in the same room or the same building but for security (aiming at preventing both the subsystems from suffering from the same fault at a time), they may be arranged distantly from each other. Since synchronous remote copy is executed between the primary and intermediate storage subsystems 104a and 104c and update of date is carried out synchronously, the distance between the primary and intermediate storage subsystems 104a and 104c may preferably be shorter. The distance should, however, be determined in accordance with an environment such as conditions of location of the subsystems and is not limited particularly. To add, it is said that the propagation delay in communication is typically 5 µs/km and the distance amounting up to about 100 km will not affect the host 102a considerably.

For improvement of security, the secondary storage subsystem 104b may preferably be installed at a location remotely distant from the primary and intermediate storage subsystems 104a and 104c.

In case the distance between the storage subsystems is long and exceeds a data transferable distance of fiber channel, the storage subsystems 104 may be connected together via a broadband circuit such as ATM, SONET, EWDM or IP by being routed through the fiber channel added with an extender device.

A management console 117 is software for monitoring/managing the storage subsystems 104 and is mounted on a host 102 packaging CPU 202 and memory 205. By taking an event of disasters into account, the management console 117 is installed on a fourth site (management center) 101d and operated on the host in the fourth site.

The management console 117 is connected to the respective storage subsystems 104 through a management network 111 so as to operate to monitor the status of storage subsystem 104, carry out changing of construction of the data processing system and control the remote copy process. Generally, the management network 111 is constructed of a network using an IP protocol but it may be a network using a different protocol. In the present embodiment, the remote copy link 116 is a network other than the management network 111 but an IP network, for instance, may be used as management network to permit the management network 111 to be used also as the remote copy link 116.

In the present embodiment, the primary storage subsystem 104a and secondary storage subsystem 104b constitute a pair for remote copy. A primary volume 109 inside a single primary storage subsystem 104a and a secondary volume 115 inside one or more secondary storage subsystems are related to each other to form remote copy pairs.

Control of the remote copy is implemented with a program 105 on the storage subsystem 104. Essentially, the programs 105 of the primary and secondary storage subsystems 104a and 104b have equivalent functions and therefore the primary volume 109 and secondary volume 115 may coexist inside the same storage subsystem 104 and in an event of disasters or during maintenance, switching between the primary volume 109 and secondary volume 115 may be executed.

To realize remote copy, the primary storage subsystem 104 has, in addition to constituents the ordinary storage subsystem 104 has, remote copy program 105a, configuration information 106a, control information 107a for remote copy queue (RCQ) 114, update information 108 for remote copy and data subjected to remote copy. Similarly, the secondary storage subsystem 104b has, in addition to constituents the ordinary storage subsystem 104 has, remote copy program 105b, configuration information 106b and control information 107b for remote copy queue 114.

The configuration information 106 has, in addition to construction, product name and address information of each of the primary, intermediate and secondary storage subsystems 104a, 104c and 104b the remote copy system has, a storage destination address of an update request to be stored in the intermediate storage subsystem 104c (hereinafter called a journal) and a storage destination address of queue control information. Original information of the configuration information 106 is held by the management console 117 and a replication of the configuration information 106 is transmitted from the management console 117 to the individual storage subsystems 104 via the intermediate storage subsystem 104c or the management network 111 so as to be held in the individual storage subsystems.

Thus, each of the primary and secondary storage subsystems 104a and 104b has a copy of the configuration information 106 so that the remote copy program 105 inside each storage subsystem 104 may consult the configuration information 106 stored in the storage subsystem 104 of its own to execute remote copy.

Each of the primary and secondary storage subsystems 104a and 104b acquires, from the configuration information 106, position information for an update request stored in the remote copy queue area 114 on the intermediate storage subsystem 104c and position information for information of control of remote copy queue area 114 stored in a control information area 113 also on the intermediate storage subsystem 104c. Then, each of the primary and secondary storage subsystems 104a and 104b uses the acquired position information to transmit a request for read or write to the remote copy queue or control information area inside the intermediate storage subsystem 104c. Through this, the primary storage subsystem or the secondary storage subsystem updates or consults the control information 107 to write the update request, data or message for remote copy to the intermediate storage subsystem or read it from the intermediate storage subsystem, thereby ensuring that the information as above can be transmitted/received between the primary and secondary storage subsystems.

To add, for maintaining consistency of data, storage subsystems 104 serving as owners are determined for individual areas inside intermediate storage subsystem 104c (for example, individual storage areas inside the control information area 113 or remote copy queue area 114) and the update of data is carried out from a storage subsystem 104 representing a solely determined owner.

When the intermediate storage subsystem 104c has a function of exclusive control of storage area, it is desirable that the function be used to maintain consistency of data stored in the control information storage area 113 and remote copy queue area 114. Enumerated as a typical exclusive function is a Reserve command of SCSI. With the Reserve command used, exclusive control in the unit of logical unit (LU) can be implemented and therefore the intermediate storage subsystem 104c can execute the exclusive control process by allotting different LU's to the individual storage subsystems 104. In this case, the intermediate storage subsystem 104c preferably sets the LU size in accordance with necessary sizes of the individual areas. In the present invention, the unit of the storage area to which the exclusive control is applied and the type of exclusive control are not limited particularly and for example, the exclusive control may be done well in the unit smaller than the LU (for example, in the unit of block).

The control information 107 for remote copy queue includes information for control of the remote copy queue 114. Each of the primary and secondary storage subsystems 104a and 104b consults the control information 107 for remote copy queue owned by the unit of its own to change the remote copy queue 114 and updates the control information 113 the intermediate storage subsystem 104c has and then informs the status after the change to a storage subsystem 104 acting as a partner of remote copy pair (from the primary storage subsystem to the secondary storage subsystem or vice versa).

The update information 108 owned by the primary storage subsystem 104a referred to herein is information concerning remote copy in connection with a write request the primary storage subsystem 104a receives from the primary host 102a and includes write time, write position and size of each write data. The update information 108 is created by the primary storage subsystem 104a when the primary storage subsystem 104a receives a write request from the primary host 102a and it corresponds to data also included in an update request transmitted by the primary storage subsystem to the intermediate storage subsystem 104c. It is to be noted that the update information 108 is erased after it is confirmed that the request for update of remote copy issued by the primary storage subsystem 104a is acquired by the secondary storage subsystem 104b. In the event that a fault takes place in the intermediate storage subsystem 104c, the update information 108 is used to perform synchronization of the primary storage subsystem 104a with the secondary storage subsystem 104c.

The program 105 described so far is installed from a different unit to a storage medium owned by each storage subsystem by using a portable storage medium such as compact disk or opto-magnetic disk or through the medium of the management network 111 and is executed by the CPU each storage subsystem has.

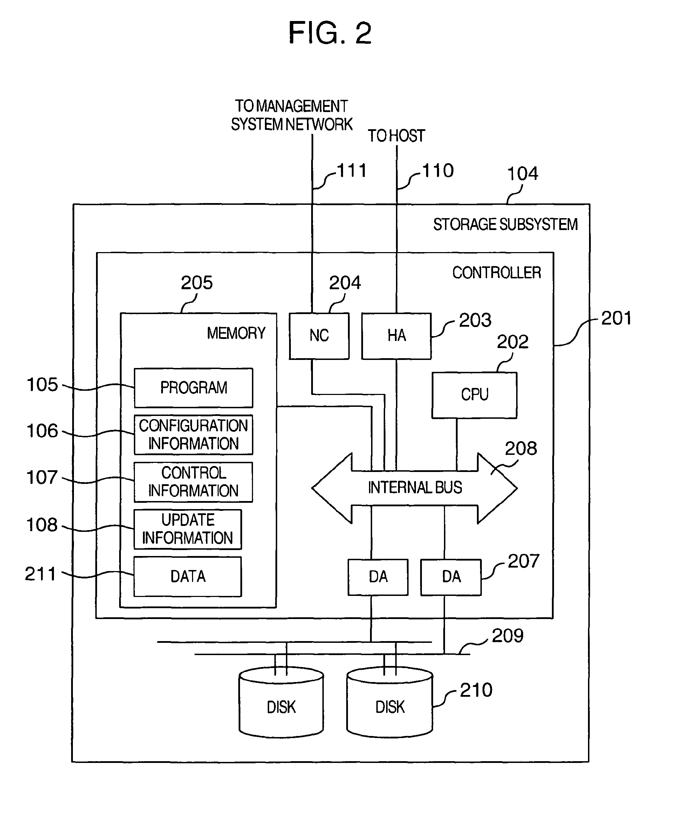

An example of construction of the storage subsystem 104 is illustrated in Fig. 2.

Each storage subsystem 104 includes a controller 201 and one or more disk devices 210. The controller 201 has a host adapter 203 for connection to the host, a memory 205, disk adapters 207 for connection to the disk devices, a processor 202 and a network controller 204 for connection to the management system network. In the present invention, the number of individual constituent components owned by each storage subsystem is not limited particularly but from the standpoint of the performance and reliability, the individual constituent components may preferably be multiplexed.

The host adapter 203 performs protocol control in respect of the interface 110 such as fiber channel. The disk adapter 207 performs a protocol process in respect of a disk interface 209 such as fiber channel.

Stored on the memory 205 are data and programs used for the remote copy process. More particularly, in order to implement remote copy, the memory 205 stores the program 105 for remote copy, configuration information 106 for remote copy, control information 107, update information 108 and data 211. In addition to the information as above, programs and control information necessary for control of the storage subsystem 104 and data 211 received from the host 102 are stored on the memory 205. Preferably, for assurance of high reliability, the memory 205 may be doubled and a power supply to the memory 205 may also be doubled.

The network controller 204 performs protocol control of the management system network 111 and carries out communication between the management console 117 and the storage subsystem 104.

The disk drive 210 receives a read or write command from the controller 201 through the disk interface 209 and performs a read or write process in accordance with the command. For assurance of high reliability, the disk interface 209 may preferably be doubled. Generally, in the storage subsystem, a plurality of disk drives 210 are used in combination to provide a redundant configuration and logical devices (hereinafter called volumes) are formed in the plurality of disk drives. The present embodiment will be described hereunder by using volumes representing logical devices.

The processor 202 performs a process concerning the storage subsystem 104. The processor 202 connects to the host adapter 203, disk adapter 207 and network controller 204 inside the controller 201 through an internal bus 208 to control them. Further, the processor 202 also connects to the memory 205 through the internal bus 208 to execute the program 105 or update the control information 107 by using the configuration information 106 or control information 107 inside the memory 205.

The present embodiment has been described by way of example of the storage system having a simplified internal construction but the internal construction of the storage subsystem 104 is not limited particularly, provided that a function comparable to that described above is achievable. For example, a storage subsystem using a switch in place of the internal bus 208 as disclosed in JP-A-10-333836 may be used.

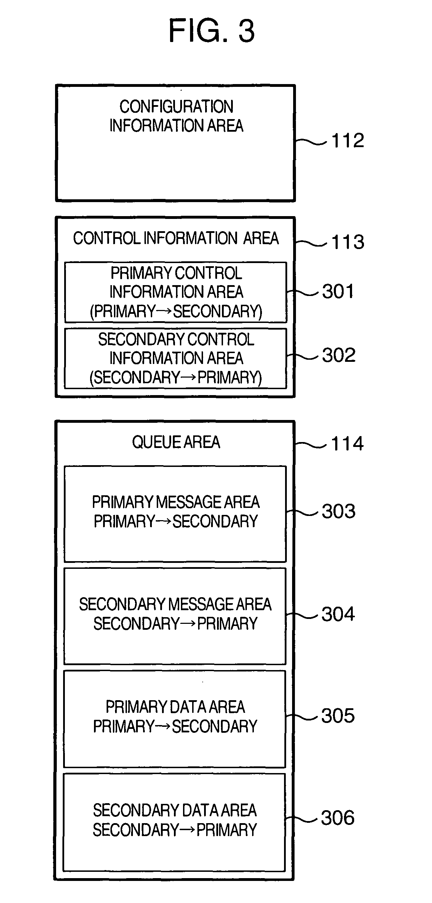

An example of configuration of the storage area arranged in the disk drive of intermediate storage subsystem 104c is depicted in Fig. 3. In the disk drive of intermediate storage subsystem 104c, three areas are provided including a configuration information area 112 in which the configuration information 106 is stored, a control information area 113 in which the control information 107 is stored and a remote copy queue area 114 in which update requests are stored.

The configuration information 106 includes, in addition to construction, product name and address information of each of the primary storage subsystem, intermediate storage subsystem and secondary storage subsystem the remote copy system has, storage positions of update requests inside the remote copy queue area 114 and storage destination addresses of the queue control information 107 inside the control information area 113.

The control information 107 includes information for control/management of the remote copy queue 144. The control information area has two kinds of areas of which one is a primary control information area 301 for storing (primary → secondary) control information 107 addressed from primary storage subsystem 104a to secondary storage subsystem 104b and the other is a secondary control information area 302 for storing (secondary → primary) control information 107 addressed from secondary storage subsystem 104b to primary storage subsystem 104a. The primary storage subsystem 104a has the ownership of the primary control information area 301 and the secondary storage subsystem 104b has the ownership of the secondary control information area 302, thereby preventing data inconsistency from taking place. To add, the configuration information 106 owned by each storage subsystem includes, in addition to addresses and sizes of the individual primary control information area 301 and secondary control information area 302, information indicative of owners of the individual areas, so that remote copy program 105 can confirm the owners by consulting the configuration information so as to perform control such that inconsistency of data does not take place. When physical exclusiveness is possible as in the case of the Reserve command of SCSI, a more robust system can be constructed. In this case, the intermediate storage subsystem 104c allots the primary and secondary control information areas every logical unit (LU) to permit exclusive control to be conducted LU by LU.

The information stored in the remote copy queue 114 is mainly sorted into two kinds of information of message and data and to store these kinds of information, the remote copy queue 144 has two kinds of data areas of message area and data area. In the following, if the two kinds of areas need not be discriminated particularly from each other, these areas will be described implicitly as being queue 114. Like the control information 107, both pieces of information are stored in the queue 114, including (primary → secondary) information addressed from primary storage subsystem 104a to secondary storage subsystem 104b and (secondary → primary) information addressed from secondary storage subsystem 104b to primary storage subsystem 104a. Accordingly, there are at least four areas in the queue 114, that is, primary message and data areas 303 and 305 for storing messages and data, respectively, issued from the primary storage subsystem 104a to the secondary storage subsystem 104b, secondary message and data areas 304 and 306 for storing messages and data, respectively, issued from the secondary storage subsystem 104b to the primary storage subsystem 104a. It is to be noted that the number of storage areas present on the remote copy queue 114 depends on the construction of the remote copy system. For example, in a remote copy system having a plurality of secondary storage subsystems, the number of storage areas present on the remote copy queue 114 will sometimes exceed four.

Like the control information area 113, the queue area 114 has the area, in which information (messages or data) addressed from primary storage subsystem 104a to secondary storage subsystem 104b is stored, of the owner represented by the primary storage subsystem and the information, addressed from secondary storage subsystem 104b to primary storage subsystem 104a, of the owner represented by the secondary storage subsystem.

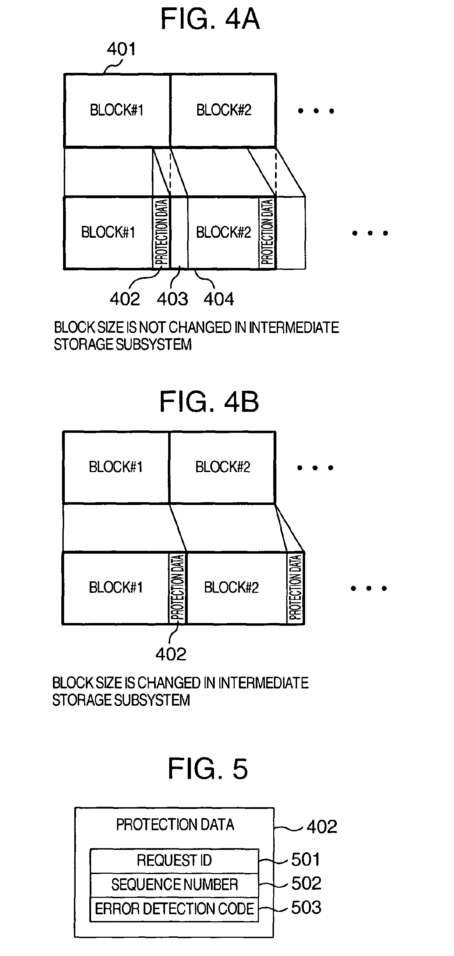

Examples of structure of data stored in the disk drive of intermediate storage subsystem 104c are depicted in Figs. 4A and 4B.

Since the disk drive 210 of intermediate storage subsystem 104c is an ordinary disk drive and the intermediate storage subsystem 104c is likewise an ordinary storage subsystem, information written to the disk drive 210 can be overwritten from another unit. Accordingly, data written to a storage area of disk drive 210 is overwritten by a logical fault (a bug in program) due to the owner or by another unit belonging to an owner different from that of the storage area, leading to the possibility that data becomes erroneous (inconsistent). If the error as above can be detected by means of the intermediate storage subsystem 104c, the error can be dealt with but it is sometimes difficult for the intermediate storage subsystem to detect the data overwrite and logical error by the host 102 or storage subsystem 104 not belonging to the owner.

Then, in the present embodiment, protection data is added to data written to the intermediate storage subsystem 104c to assure the security of the data transmitted/received between the primary and secondary storage subsystems 104a and 104b through the intermediate storage subsystem 104c.

Examples of data added with protection data are depicted in Figs. 4A and 4B. In the present embodiment, it is assumed that the intermediate storage subsystem 104c is a storage subsystem having block devices such as SCSI. Typically, the block has a size of 512 bytes and the disk device the intermediate storage subsystem 104c has is accessed in the unit of block.

Shown in Fig. 4A is an example in which the last area of each block 401 the intermediate storage subsystem 104c has is defined as a protection data area 402. The protection data 402 is written to the end of each block, so that source data to be stored in the last area of a block conventionally is stored in a head position (403) of the succeeding block. As a result, a position (404) heading the succeeding block conventionally follows the storage area 403 and with this method used, the storage position of data is successively shifted backwards.

Consequently, the thus provided protection data area causes the data stored within one block conventionally to be stored over a plurality of blocks. Then, in order for data of one block to be stored in the intermediate storage subsystem 104, a plurality of blocks must be updated. The block device is accessed in the unit of block and therefore, it is necessary, in this case, to read and write all of related blocks to the memory 205 inside the controller from the disk device, update the data and write it to the disk device 210. In the present invention, however, the data to be stored in the intermediate storage subsystem 104c is written only once and the same data is not read and written, proving that employment of the method shown in Fig. 4A hardly matters.

Shown in Fig. 4B is an example in which the block size of intermediate storage subsystem 104c is increased by the amount of protection data and protection data 402 is stored in the thus increased area. With this method used, data added with the protection data 402 can be stored in the disk device without changing the block address.

An example of protection data 402 is depicted in Fig. 5. As described in connection with Figs. 4A and 4B, the protection data 402 is added to each block stored in the intermediate storage subsystem 104c. The protection data 402 is mainly sorted into two kinds of data, of which one is logical information having identifier 501 of request and sequence number 502 in the request and the other is an error detection code 503 for checking an error in block data. The former is used to detect a logical error and data falsification by others and the latter is used to detect a data failure of block per se. The error detection code 503 may include parity, check sum, ECC, CRC or Hamming code but in the present invention, any type of error detection code can be used, provided that error detection and packaging are possible.

The protection data 402 is added to data by means of host adapter 203 of the storage subsystem 104 which creates the data and the data is checked by using the protection data by means of host adapter 203 of the storage subsystem 104 which is on the receiving side.

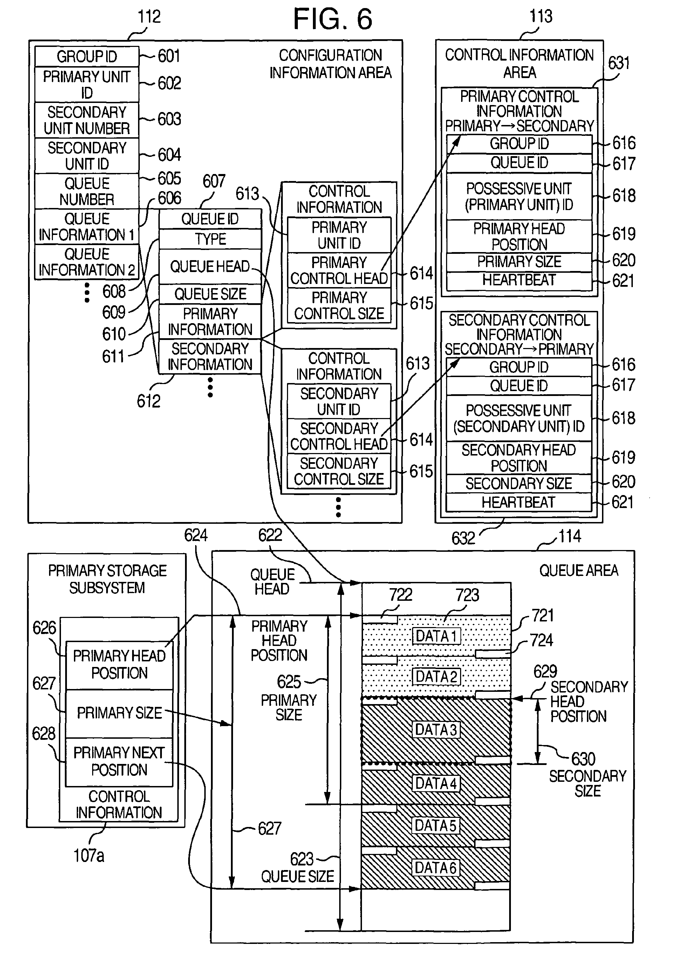

Referring now to Fig. 6, there is illustrated an example of a logical structure of data stored in the intermediate storage subsystem 104c. In particular, Fig. 6 shows information concerning an update request transmitted from primary storage subsystem 104a to secondary storage subsystem 104b in a remote copy group.

Configuration information 106 stored in the configuration information area 112 includes information of static configuration and the configuration information 106 is updated when the configuration of the remote copy group is changed. Each storage subsystem 104 acquires the configuration information 106 from the configuration information storage area 112 of intermediate storage subsystem 104c to develop it in the unit of its own and acquires information concerning remote copy and configuration information concerning the remote copy queue area 114. Then, each storage unit subsystem executes the remote copy and queue control by utilizing the information as above.

In the present embodiment, the configuration information 106 is distributed to the individual storage subsystems 104 through the medium of intermediate storage subsystem 104c but alternatively, the configuration information 106 may be transmitted to each storage subsystem 104 directly from the management console 117.

Shown in Fig. 6 is the configuration information 106 concerning a single remote copy group.

Usually, the remote copy group is constructed of one or more volumes and defined as a group which keeps consistency between individual volumes. Such an operation as suspend, resynchronization and the like applied to the remote copy group can be executed in the unit of volume pair as well as in the unit of group. The remote copy group is constructed of a single primary storage subsystem 104a and one or more secondary storage subsystems 104b and is assigned with an identifier (group ID) 601. Accordingly, the configuration information 106 includes group ID 601, ID 602 of the primary storage subsystem belonging to the remote copy group, ID 604 of the secondary storage subsystem also belonging to the remote copy group and the number 603 of the secondary storage subsystems 104b. Further, the configuration information 106 is stored with the number 605 of areas such as primary message areas and primary data areas (hereinafter called queues) existing in the queue area 114 and separate information 606 of each queue.

In the fundamental construction in which the one to one correspondence is made between the primary storage subsystem 104 and secondary storage subsystem 104 as shown in Fig. 3, bi-directional queues are created in respect of messages and data and therefore there are four queues in connection with a single remote copy group. In Fig. 6, separate information concerning queues of primary data transmitted from the primary storage subsystem 104a to the secondary storage subsystem 104b is shown. Similar control can be carried out for queues in the reverse direction by simply exchanging the primary and secondary relationship.

The separate information of queue includes identifier 607 of queue, queue type 608 for identifying which one of message and data a queue is concerned with, head position 609 of the queue in the queue area 114 of intermediate storage subsystem 104c, size 610 of the queue, primary information 611 concerning control information 107 transmitted from the primary storage subsystem 104a to the secondary storage subsystem 104b and secondary information 612 concerning control information 107 transmitted from the secondary storage subsystem 104b to the primary storage subsystem 104a.

In case the configuration information area 112 and the queue area 114 exist in different storage subsystems 104, respectively, an identifier of the storage subsystem in which the queue area is arranged and a logical address of LU of the queue are also included as the head position 609. When a plurality of secondary storage subsystems are provided, a plurality of pieces of the information as above are also needed.

The information 611 or 612 concerning the control information 107 includes identifier 613 of the storage subsystem which is a source of issue of control information, head position 614 indicative of a storage position of the control information in the control information area 113 and size 615 of the control information. On the basis of the information concerning the control information within configuration information 106 (for example, 611 or 612), each storage subsystem 104 specifies a storage area in which the control information 107 is stored to exchange the control information 107.

Available as control information 107 corresponding to a single queue are one piece of primary control information 631 and one or more pieces of secondary control information 632. Each control information 107 is updated by a predetermined sole storage subsystem 104 but the control information can be consulted from a plurality of storage subsystems 104.

Each control information 107 has identifier 616 of remote copy group, identifier 617 of queue, possessive unit identifier 618 indicative of a unit possessing the control information 107, head position 619 which indicates a head position of data undergoing the remote copy for the purpose of indicating a progress condition of the remote copy process, size 620 of the data during the remote copy and heartbeat 621.

The group ID 616, queue ID 617 and possessive unit identifier 618 are used to check whether the control area is logically correct. Stored in the head position 619 and size 620 are a head position of a storage area in the queue area in which the data subjected to the remote copy process is stored and a size of the storage, respectively. Further, each storage subsystem 104 periodically writes information to the heartbeat 621 to thereby inform another unit that the unit of its own is in operation. In other words, by confirming whether or not the heartbeat 621 is updated, it can be decided from the different unit whether the storage subsystem corresponding to the heartbeat is in operation. Preferably, the information written to the heartbeat area 621 has temporally changeable values such as defined by counter values or a timer.

Since the primary storage subsystem 104a and secondary storage subsystem 104b are not controlled or operated synchronously with each other, the equality is not always maintained among data indicated by the head position 619 and size 620 of primary control information 631 stored in the control information area 113 of intermediate storage subsystem 104c, data indicated by the head position 619 and size 620 of secondary control information 632, data indicated by the head position 626 and size 627 of control information 107a owned by the primary storage subsystem 104a and data indicated by the head position and size of control information 107b owned by the secondary storage subsystem 104b.

Making reference to Fig. 6, how the primary control information 631, secondary control information 632, control information 107a the primary storage subsystem 104a has and control information 107b the secondary subsystem 104b has are related to each other will be described.

Assumptively, Data1 to Data6 are stored in the queue area 114. It is also assumed that in Fig. 6, the primary control information 631 on intermediate storage subsystem 104c has its head position 619 indicative of Data1 and its size 620 indicative a size of from Data1 to Data4, so that a request for processing the heading Data1 to the end Data4 (data during process) proceeds. It is further assumed that the secondary control information 632 has its head position 619 indicative of Data3 and its size 620 indicative of a size of Data3, so that a request for processing the Data3 (data during process) proceeds.

Further, assumptively, the control information 107a owned by the primary storage subsystem 104a has its head position 626 indicative of Data1 and its size indicative of a data size of from Data1 to Data6. Namely, it is assumed that the control information 107a indicates data of from Data1 to Data6 after all and the primary storage subsystem 104a recognizes the Data1 to Data6 as data participating in the remote copy. When the primary storage subsystem 104a writes the next data to the queue area 114, data is written from a position next to Data6 indicated by next position 628 of the control information 107a.

On the other hand, the secondary storage subsystem 104b has already acquired Data1 and Data2 from the intermediate storage subsystem 104c and the control information 107b owned by the secondary storage subsystem 104b has its head position 629 indicative of Data3 and its size 630 indicative of a data amount of Data3. Accordingly, the secondary storage subsystem 104b recognizes a request for processing the Data3 (data during process).

To add, by consulting the primary control information 631 on the intermediate storage subsystem 104c, the secondary storage subsystem 104b determines that the primary storage subsystem recognizes data from Data1 at the head 624 to Data4 as the request during process (data during process). Accordingly, by consulting the primary control information 631 stored in the intermediate storage subsystem 104c, the secondary storage subsystem 104b can recognize that the Data1 and Data2 which have already been processed and Data3 during process as well as Data4 should be processed.

The Data5 and Data6 constitute information added from the primary storage subsystem 104a to the queue area 114 after the primary control information 631 on the intermediate storage subsystem 104c has been updated. Since write of data to the queue area and update of the primary control information 631 are executed asynchronously with each other, the primary control information 631 has not yet been updated in respect of the addition of Data5 and Data6 to the queue area 114. The latest control information is present in the form of control information 107a inside the primary storage subsystem 104a and when a chance of updating the primary control information 631 comes along from the primary storage subsystem 104a to the intermediate storage subsystem 104c after a lapse of constant time, the primary control information 631 will be updated to the latest information.

Next, a process for the primary storage subsystem 104a to update the primary control information 631 on the intermediate storage subsystem 104c and data in the queue area (hereinafter called a journal or update request) or to update the control information 107a the primary storage subsystem has will be described.

The primary control information 631 and data in the queue area are updated by the primary storage subsystem 104a synchronously or asynchronously with a write request from the host 102.

The next position 628 of the control information 107a the primary storage subsystem 104a has is updated inside the primary storage subsystem 104a in synchronism with forwarding of an update request from the primary storage subsystem 104a to the queue area 114. The head position 626 of control information 107a the primary storage subsystem 104a has is updated by the primary storage subsystem 104a asynchronously with the write request from the host on the basis of the head position 619 of secondary control information 632 the intermediate storage subsystem 104c has. The update can be performed for a plurality of write operations in order to decrease traffic. The size 627 of control information 107a of the primary storage subsystem 104a can be updated concurrently with update of each of the head position 626 and the next position 628.

The primary storage subsystem 104a periodically accesses the data stored in the control information area 113 of intermediate storage subsystem 104c. At that time, the primary storage subsystem 104a acquires (reads) the secondary control information 632 and by consulting the head position 619 of secondary control information 632, changes the head position 626 of control information 107a the primary storage subsystem has. For example, in the above example, the head position 626 of control information 107a indicates the Data1 at present but the head position 619 of secondary control information 632 indicates the Data3 and therefore, when accessing the control information area 113 of intermediate storage subsystem 104c, the primary storage subsystem acquires the secondary control information 632 to update the head position 626 of control information 107a of the own unit to Data3.

At that time, the update information 108 stored in the primary storage subsystem 104a can also be erased. Namely, since the primary storage subsystem can recognize, by consulting the secondary control information 632, that the Data1 and Data2 have already been acquired by the secondary storage subsystem, the update information 108 for the Data1 and Data2 can be erased. Any timing can be used for erase, provided that it is after the time that the head position 626 is updated.

Further, the primary storage subsystem 104a also updates the primary size 627 of control information 107a by calculating it from the head position 626 and the next position 628 the control information 107a of primary storage subsystem 104a has. Through the process as above, the primary size of control information 107a can indicate the amounts of data of from Data3 to Data6.

The control information 107a the primary storage subsystem has can be updated to the latest data through the above process and hence, the primary storage subsystem writes it to the control information area 113 of intermediate storage subsystem so as to update the primary control information 631.

Next, a process for the secondary storage subsystem 104b to access the control information area 113 of intermediate storage subsystem 104c so as to update the secondary control information 632 will be described.

The secondary storage subsystem 104b acquires the primary control information 631 from the intermediate storage subsystem 104c at intervals of constant times and acquires an update request, that is, one of update requests indicated by the primary control information 631 which has not been acquired yet, from the queue area 114. Thereafter, the secondary storage subsystem 104b updates the control information 107b and secondary control information 632 the own unit has.

In the aforementioned example, the primary control information 631 initially indicates Data1 to Data4 as data during process and the head position 619 of secondary control information 632 indicates Data3. Accordingly, by consulting the primary control information 631, the secondary storage subsystem 104b recognizes that the unit of its own has not yet acquired Data3 and Data4. Then, after acquiring the Data3 and Data4 from the queue area 114, the secondary storage subsystem updates the control information 107b the own unit 104b has and the secondary control information 632 the intermediate storage subsystem 104c has. In other words, the control information is updated such that both the head position 629 of control information 107b and the head position 619 of secondary control information 632 indicate Data4 and both the size 630 of control information 107b and the size 620 of secondary control information 632 indicate 0 (zero).

In case the secondary storage subsystem 104b does not acquire any update request from the queue area 114 for some reasons, for example, because of a high operating rate of the secondary storage subsystem 104b, the secondary storage subsystem 104b performs only update of the control information. In this case, the control information is updated such that both the head position 629 of control information 107b and the head position 619 of secondary control information 632 indicate Data3 and both the size 630 of control information 107b and the size 620 of secondary control information 632 indicate a data amount of totaled Data3 and Data4.

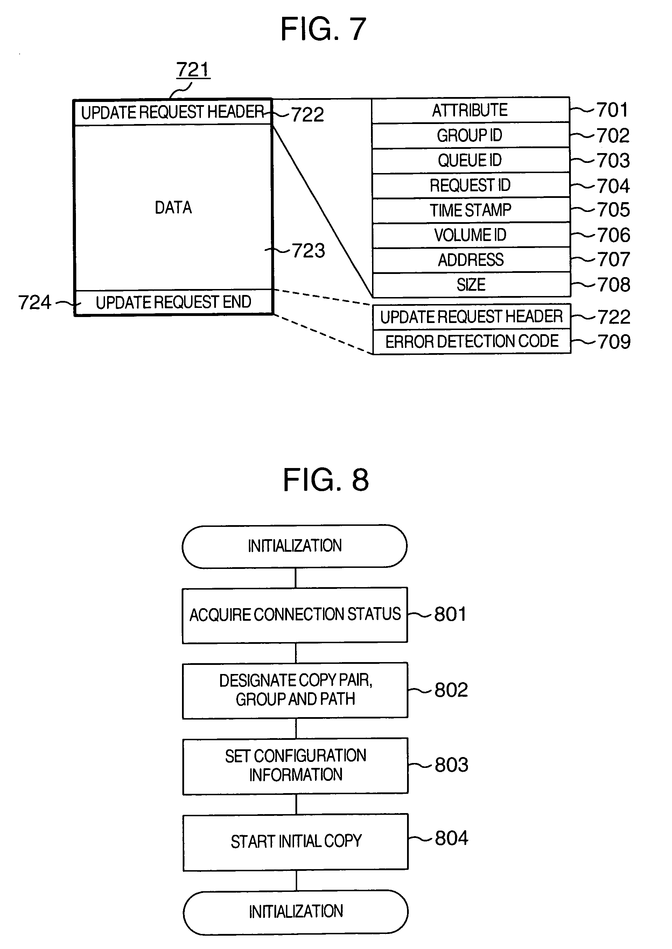

Referring to Fig. 7, there is illustrated an example of a data structure of each request 721 issued from the primary or secondary storage subsystem and stored in the queue.

Header information 722 is stored at the head of a request and end information 724 is stored at the end. Stored in the header information 721 are an attribute of the request and separate information thereof including attribute 701, group ID 702 and queue ID 703. The attribute of request is used for checking logical errors. The separate information of request is sorted into two kinds of information including time series information and positional information. The time series information includes serial number of request in the queue (request ID) 704 and time stamp 705 added to the primary storage subsystem 104a or host 102 and is used to align requests in time series sequence inside the secondary storage subsystem 104b and check a dropout of request. The positional information includes ID 706 of volume, address 707 inside the volume and size 708 of request and on the basis of the positional information as above, data contained in a request is stored in the secondary storage subsystem 104b. It is to be noted that the positional information contained in the request is the same as that contained in the write request received from the host. The size 708 indicates a size of write data received from the host and this size 708 is added with fixed sizes of the header information 721 and end information 724 to provide a size which coincides with a size of request.

Data 723 is write data received from the host.

The end information 724 contains an error detection code 709 in addition to header information 722. The error detection code 709 is calculated by way of the header information 722 and data 723 and detects an error in the whole of the request. By using the request error detection code 709 in combination with protection data 402 shown in Fig. 5, a highly reliable remote copy process can be realized.

By writing the control information such as header information 722 and end information 724 and the write data 723 in consecutive areas in this manner, a request issued to the intermediate storage subsystem 104c in correspondence with reception of a write request from the host provides a write request applied to the consecutive areas and only one write to the intermediate storage subsystem 104c suffices.

It will be appreciated that each request contains both of the control information and write data received from the host 102 as described above and is also called a journal.

A flowchart showing an example of a procedure of initialization in the present embodiment is depicted in Fig. 8. Firstly, a manager acquires, through the management console 117, information of units constituting the remote copy system, information of storage subsystem 104 such as volumes inside each storage subsystem, information of applications operating on the host 102 existing in the remote copy system and information of a volume used by the host 102 (801).

Next, the manager determines volume pairs for remote copy and a consistency group assembling volume pairs on the basis of the information as above collected by the manager console and prepares configuration information 106 for remote copy of each storage subsystem 104 and inputs it to the management console 117 (802). In connection with the configuration information 106, the management console 117 holds it original information and its copy is transmitted to each storage subsystem 104 via the intermediate storage subsystem 104c or management network 111 (803).

After the configuration information 106 is set in each storage subsystem 104 so that the remote copy pair may be set up and a consistency group may be created, an initial copy of data from the primary storage subsystem 104a to the secondary storage subsystem 104b is executed through the intermediate subsystem 104c and a remote copy process is started (804).

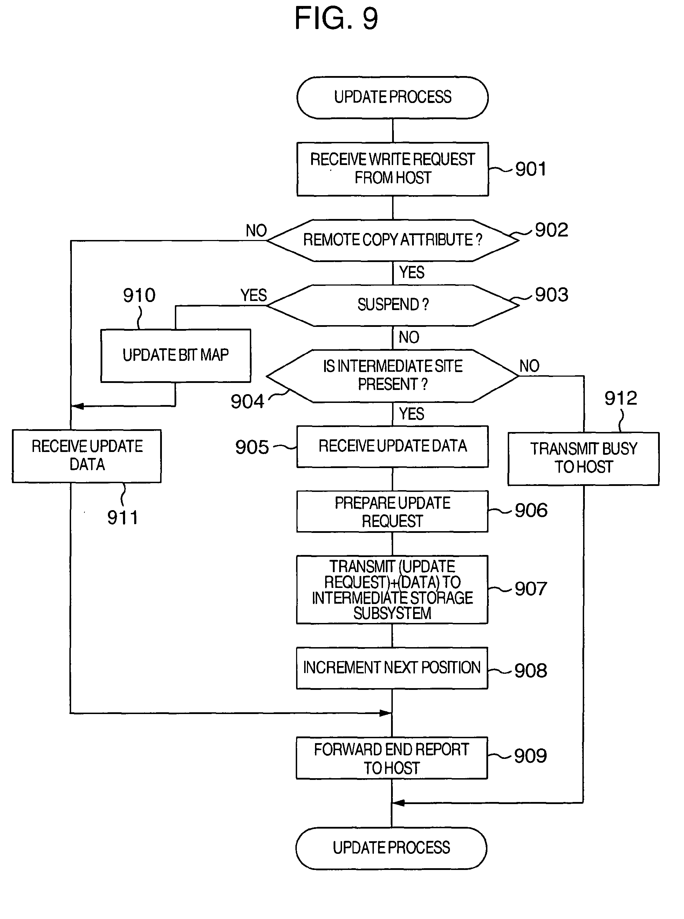

Referring to Fig. 9, there is illustrated an example of an update process executed when the primary storage subsystem 104a receives a write request from the host 102 in the present embodiment.

The primary storage subsystem 104a receives a write request from the host 102 (901). Then, the primary storage subsystem 104a calculates related volume and address from the write request and performs a check process as below. Firstly, the primary storage subsystem examines whether a remote copy attribute is designated in respect of the volume to which the write request is made (902) and when the remote copy attribute is not designated, the primary storage subsystem receives update data (hereinafter called write data) from the host 102 (911) and reports the host 102 that the process responsive to the write request is ended (909), thus ending the process.

With the remote copy attribute designated, the program proceeds to step 903. The primary storage subsystem 104a checks the status of a remote copy pair corresponding to the write object volumes so as to check whether the pair is set up normally (paired status) or whether the pair is split (suspended) (903).

Under the suspend state, difference information is recorded (910), update data is received from the host 102 (911) and end of the update process is reported to the host 102 (909), thus ending the process. The difference information is held in a format of bit map in which position information of an arbitrary size corresponds to one bit. When saving the difference information in the form of a bit map, overwrite onto the same address is indicated by the same bit, with the result that the area to be assured for storage of the difference information can be small but on the other hand the sequence or order of the write request (reception sequence) received from the host cannot be conserved. If the sequence is desired to be held, an update log such as reception time of each write request, address of write object storage area, size of write data and write data must be held and as a result, a larger storage capacity than that required for managing the difference information in the form of a bit map is needed. Normally, the suspend lasts for a long time and therefore the difference information is often held in the bit map form. The bit map can be stored on the memory 205 of storage subsystem 104 but it may otherwise be stored on the disk 210.

Under the paired state, the primary storage subsystem 104a check the presence or absence of a storage area on the intermediate storage subsystem 104c. Specifically, the primary storage subsystem 104a calculates, from the configuration information 106a and control information 107a the primary storage subsystem has, a remaining storage capacity of the queue area 114 existing in the intermediate storage subsystem 104c (904).

Usually, a sufficiently large queue area 114 is prepared in the intermediate storage subsystem 104c in order that the queue area 114 is not occupied fully with a load of host 102, that is, write request and write data from the host. But an unexpected load will sometimes take place and in such an event, the queue area of intermediate storage subsystem 104c will be exhausted.

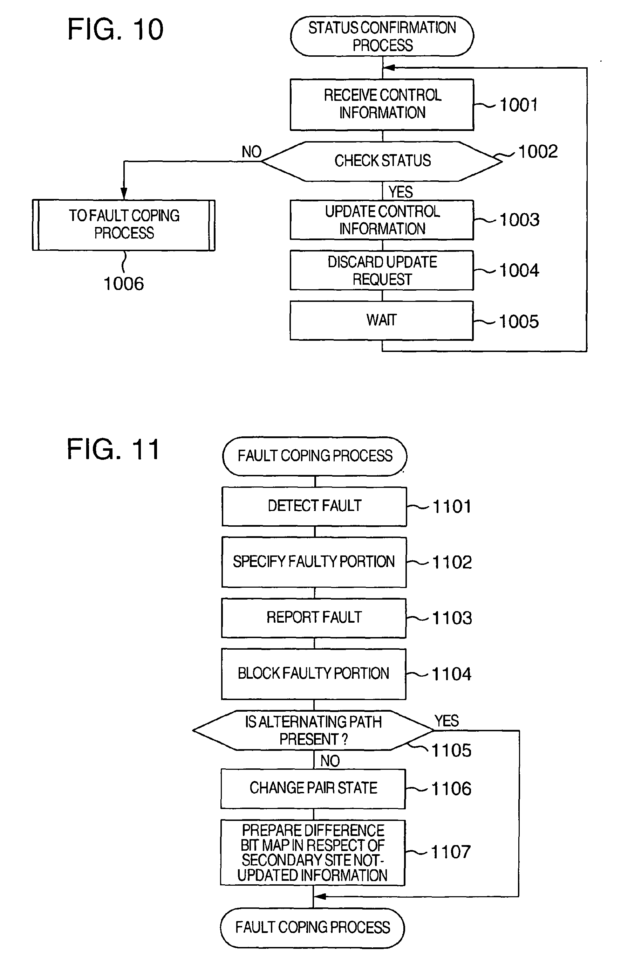

In Fig. 9, when the queue area of intermediate storage subsystem 104c has no empty capacity, the primary storage subsystem 104a returns a busy report to the host 102 and rejects the reception of the write request (912). Instead of returning the busy to the host 102, the primary storage subsystem 104a may determine that a fault occurs in the intermediate storage subsystem in the step (912) and may change the remote copy state to the suspend state. In this case, the primary storage subsystem 104a carries out a fault coping process as shown in Fig. 11 to shift the remote copy state to suspend, receives update data (write data) from the host to update the bit map and gives an ordinary end report to the host.

When it is determined in the step 904 that there is an empty capacity in the intermediate storage subsystem 104c, that is, when it is determined in the process of from the steps 902 to 904 that the remote copy process is possible, the primary storage subsystem 104a carries out a process in step 905 and ensuing steps. Firstly, the primary storage subsystem 104a receives write data corresponding to the write request from the host 102 (905).

Next, the primary storage subsystem 104a prepares a request for update of remote copy corresponding to the write request (906), prepares an update request as shown in Fig. 7 in combination with write data and writes this update request to the next and ensuing positions of the queue area 114 of intermediate storage subsystem 104c (907). At that time, if write of the update request exceeds the last end of queue area 114, data following a superfluous part is written, starting with the head of queue area 114. To add, in writing the update request to the queue area 114, the primary storage subsystem 104a must be controlled such that the head position 629 indicated by the control information 107b the secondary storage subsystem 104b has is not exceeded.

Subsequently, the primary storage subsystem 104a changes the next position 628 and size 627 of control information 107a by a size of the update request written to the queue area 114 (908) and reports the host 102 of the end (909) to thereafter end the process.

Referring to Fig. 10, there is illustrated an example of an update process of control information executed between the primary storage subsystem 104a and intermediate storage subsystem 104c. Firstly, the primary storage subsystem 104a acquires secondary control information 632 which represents control information of the secondary storage subsystem 104b (1001).

Then, the primary storage subsystem consults the heartbeat inside the secondary control information 632 to check whether the secondary storage subsystem 104b is in operation. More specifically, the primary storage subsystem 104a conserves the latest one of the heartbeats of secondary storage subsystem acquired in the past in the memory 205 inside the primary storage subsystem 104a and when newly obtaining secondary control information 632 from the intermediate storage subsystem 104c, the primary storage subsystem compares the acquired heartbeat information in secondary control information 632 with the heartbeat information stored in the memory to perform the checking. If the two pieces of heartbeat information have the same value, the secondary storage subsystem is determined not to be in operation.

To add, since the update process of control information is carried out asynchronously between the primary storage subsystem 104a and the secondary storage subsystem 104b, the secondary storage subsystem 104b is not determined not to be in operation by determining that the heartbeat information is not updated once but the operating condition of secondary storage subsystem 104b is decided by expanding decision operation to the case where the heartbeat information is not updated through consecutive several check operations or to the case where the heartbeat information is not updated over a constant time or more. For example, when the update period of secondary control information 632 is one second, the secondary storage subsystem is determined not to be in operation if the heartbeat information is not updated over five or more seconds.

When the secondary storage subsystem is determined not to be in operation in step 1002, the primary storage subsystem 104a performs a fault coping process as shown in Fig. 11 (1006).

In case the secondary storage subsystem is determined to be in operation in the step 1002, the primary storage subsystem 104a consults the secondary control information 632 stored in the control information area 113 of intermediate storage subsystem 104c to update control information 107a the own unit has. In other words, the primary head position 626 of control information 107a is made to be coincident with the secondary head position 619 of secondary control information 632 and the primary size 627 of control information 107a is so set as to cover a size ranging from the primary head position 626 to the primary next position 628. Then, the primary storage subsystem 104a uses its new control information 107a to update the primary control information 631 stored in the control information area 113 of intermediate storage subsystem 104c (1003).

Next, the primary storage subsystem discards the update information 108. The update request newly updated by the secondary storage subsystem 104b, that is, the update request existing between the head position before the change in the step 1003 and the head position after the change has already been acquired by the secondary storage subsystem. Accordingly, the primary storage subsystem need not hold the update information corresponding to this update request and therefore, the primary storage subsystem make this update information 108 ready to be discarded and after a desired time, that update information is discarded (1004).

Further, the primary storage subsystem 104a waits for a constant time (for example, one second) before it carries out the process of from step 1001 to step 1004 at intervals of constant times (1005) and again repeats the process starting with the step 1001.

Referring now to Fig. 11, there is illustrated an example of a process executed by the primary storage subsystem in the event that a fault occurs in the remote copy system.

When detecting a fault (1101), the primary storage subsystem 104a specifies a portion at which the fault takes place (1102) and reports the management console 117 of the fault (1103). The management console 117 receiving the fault report blocks the faulty portion on the basis of a command from the manager (1104). The faulty portion is blocked not only by the management console 117 but also by the primary storage subsystem 104 which has detected the fault.

After blocking the faulty portion, the primary storage subsystem acquires the status of a communication path of remote copy and checks whether there is an alternating path (1105). In the presence of the alternating path, the process for remote copy can continue and therefore the primary storage subsystem 104 switches the path for remote copy to the alternating path and thereafter ends the fault process.

In the absence of the alternating path, the primary storage subsystem changes the status of remote copy pair. Even when the primary storage subsystem 104a determines in the step 904 that no empty area exists in the queue area of intermediate storage subsystem 104c and deems the nonexistence of empty area in the queue area as the occurrence of a fault, such a case is handled as the absence of alternating path.

If the primary storage subsystem 104 is detecting a fault in the case of nonexistence of the alternating path, it changes the paired state by itself (1106) and registers position information of write data not stored in the secondary storage subsystem 104b (1107). Alternatively, the management console 117 may command the primary storage subsystem to perform a process for changing the pair state and preparing the difference information (bit map).

Through the step 1106, the pair state is changed from the normal state (paired state) before fault detection to the state (suspend) in which the pair is split. The bit map is prepared on the memory 205 of primary storage subsystem 104a or on the disk drive 210. It is to be noted that at the time that preparation of the bit map is started, the request number concerning update request in each group is also stored in the storage subsystem.

The primary storage subsystem 104a prepares a bit map headed by an unreflected remote copy update request. For example, when the suspend state takes place at the time that the remote copy system is in the state shown in Fig. 6, the primary storage subsystem 104a prepares a bit map to store the difference information concerning Data1 to Data6 in the bit map and after initializing the bit map, the primary storage subsystem prepares a bit map for write requests received from the host 102 after then (910).

When business affairs from the primary host 102a to the primary storage subsystem 104a continue even after the occurrence of a fault, difference information is stored in the bit map on the primary storage subsystem 104a through the process of step 1107 each time that the primary storage subsystem 104a receives a write request and write data from the host 102a.

Since the process time for the process of from the step 1101 to step 1106 is sufficiently short, the process can be proceeded with while the primary storage subsystem receives an IO request of the host 102 and continues a process. The process shown in the step 1107 also consumes much time if carried out for all of remote copy pairs at a time but can be performed for each remote copy pair within a sufficiently short time. By executing the update process of bit map shown in the step 1107 synchronously with the IO request from the host 102, a distribution process can be proceeded with among remote copy pairs and hence the bit map update process can be performed while continuing the IO process of host 102.

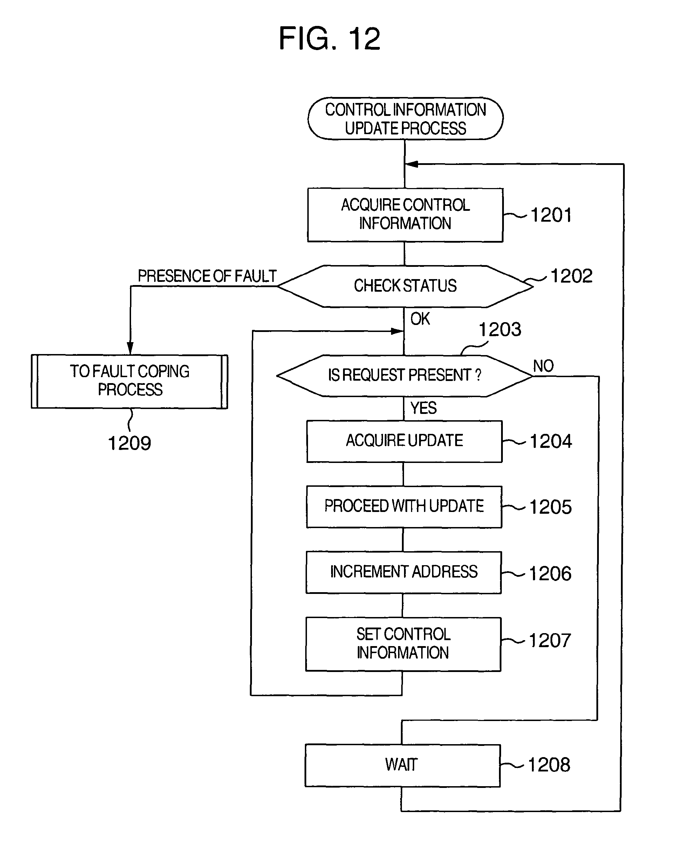

Referring to Fig. 12, there is illustrated an example of a process in which the secondary storage subsystem 104b acquires the control information and updates it.

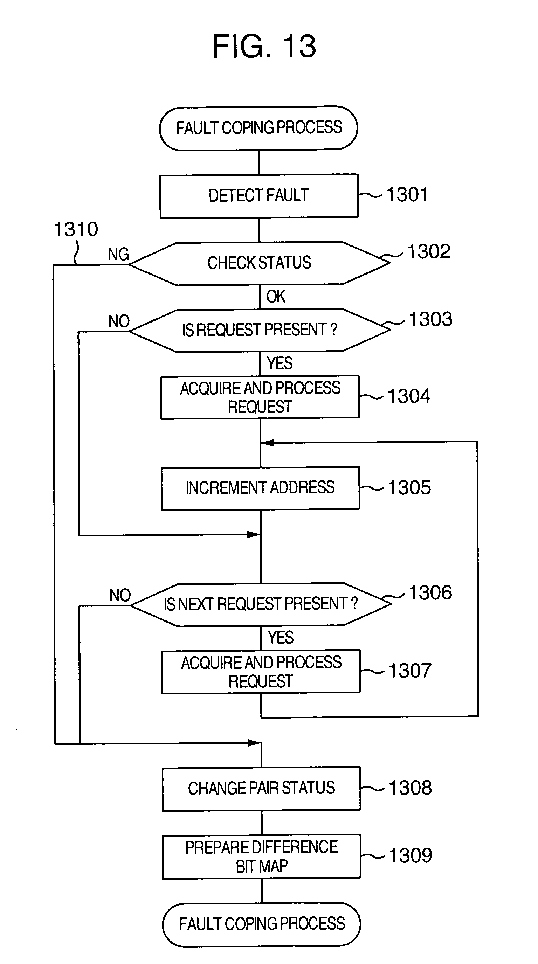

Firstly, the secondary storage subsystem 104b acquires the primary control information 631 from the control information area 113 of intermediate storage subsystem 104c (1201). Next, as in the step 1001, it is checked whether the control information acquisition is done normally or whether the heartbeat information is updated (1202). In the event that a fault is detected in the step 1202, the secondary storage subsystem carries out the fault coping process shown in Fig. 13 (1209).

When the state is normal, that is, when no fault is detected, the secondary storage subsystem first examines the presence or absence of an update request (1203). The secondary storage subsystem can grasp, from a difference between the request during the remote copy process indicated by the primary head position 619 and primary size 620 of the acquired primary control information 631 and the request during remote copy process indicated by the head position 629 and size 630 of the control information 107b the unit of its own has, an update request added to the queue area 114 after the time that the unit of its own updated the control information 107b previously.

If no new update request (that is, the update request newly added to the queue area after the secondary storage subsystem updated the control information 107b previously) is determined in the step 1203, the secondary storage subsystem ends the control information update process and waits for a constant time (1208).

In the presence of the update request, the secondary storage subsystem 104b acquires that update request from the queue area (1204). When the capacity of data acquirable by the secondary storage subsystem 104b is sufficiently large, the secondary storage subsystem 104b acquires all update requests from the queue 114 at a time.

Subsequently, the contents of the update request is analyzed inside the secondary storage subsystem 104b and the data transmitted from the primary storage subsystem is reflected on the volume in the secondary storage subsystem 104b in accordance with the update request (1205). Namely, data 723 contained in the update request is stored in a storage area indicated by an address 707 contained in the update request.

Thereafter, the control information 107b the secondary storage subsystem has is updated by an amount of the update request corresponding to the updated data (specifically, the head position 629 and secondary size 630 are updated) (1206) and the secondary control information 632 stored in the control information area 113 of intermediate storage subsystem 104c is updated by using the contents of the control information 107b after update (1207).

To add, in case the size of update request is determined to be large in the step 1203 and the update request cannot be acquired at a time, the secondary storage subsystem 104b divides the update request for the purpose of acquiring and processing it. Firstly, the secondary storage subsystem 104b prepares an area for update request acquisition and acquires the update request starting with the head position. This area is an area preparable by the secondary storage subsystem 104b, having 10MB, for instance.

It should be understood that, in connection with the last update request to be stored in this storage area, acquisition of the last update request is interrupted on the way in most cases. For example, an instance will be considered in which an area of 10MB is assured in the secondary storage subsystem and update requests amounting up to 9MB have already been acquired in this area. Then, the secondary storage subsystem will read the next update request to the area inside the own unit, starting with a position of 9MB. But if the next update request has a size of 2MB, an initial 1MB portion of that update request can be acquired but the remainder cannot be acquired.

In such a case, the secondary storage subsystem acquires an update request of only the initial 1MB portion from the intermediate storage subsystem and analyzes header information corresponding to that portion to reflect only data stored in the head portion upon the volume inside the secondary storage subsystem. Then, only in connection with the head portion of the processed update request, the secondary head position 629 and secondary size 630 of control information 107b are changed to update the control information 113 on the intermediate storage subsystem 104c. It will be appreciated that, in connection with the remainder of the update request, the secondary storage subsystem will process it during acquisition of the next update request.

Referring to Fig. 13, there is illustrated an example of a process executed in the secondary storage subsystem 104b in the event of the occurrence of a fault. When a fault takes place, the secondary storage subsystem 104b acquires, as much as possible, update requests remaining on the intermediate storage subsystem 104c. The primary storage subsystem 104a is synchronous with the intermediate storage subsystem 104c and therefore when a fault occurs only in the primary storage subsystem 104a and access to the intermediate storage subsystem 104c is possible, the secondary storage subsystem 104b can prevent data extinguishments by acquiring the update requests stored in the intermediate storage subsystem 104c.

The secondary storage subsystem 104b first detects the fault occurring in the primary storage subsystem from, for example, a heartbeat of primary control information 631 acquired from the intermediate storage subsystem 104c (1301). Then, the secondary storage subsystem 104b examines the status of intermediate storage subsystem 104c (1302).

In the event that access to the intermediate storage subsystem 104c is not permitted, further acquisition of update request is impossible and hence the secondary storage subsystem 104b changes the pair state for remote copy to suspend (1308) and prepares a difference bit map (1309).

In this case, the bit map is created starting from the time that the fault takes place. In the example of Fig. 6, the secondary storage subsystem 104b has acquired update requests up to Data2 to end the remote copy process and hence difference information is stored in the bit map in respect of information of Data2 and ensuing data. In other words, after having prepared the bit map, the secondary storage subsystem 104b stores in the bit map the difference information concerning other pieces of update information which have been updated by the secondary storage subsystem 104b after the Data2.

Available as the case where data is updated and the difference information is prepared in the secondary storage subsystem 104b are an instance in which for maintenance, for instance, the primary storage subsystem is placed in suspend condition and the secondary host 102b carries out business affairs by using the secondary storage subsystem and an instance in which after a fault takes place in the primary storage subsystem as in the present embodiment, business affairs are taken over to the secondary host 102b and the secondary host issues an input/output request to the secondary storage subsystem. In this case, information of the secondary storage subsystem 104b is settled up to Data2 and in write operation from the secondary host 102, difference information is held as update information for Data2 and ensuing data.

As has been described in connection with Fig. 11, during suspend of the secondary storage subsystem, even the primary storage subsystem holds difference information in respect of update information after the suspend. Since the difference information is held in both the primary storage subsystem 104a and the secondary storage subsystem 104b after suspend starting with the time that the suspend initiates, this difference information can be used to execute a resynchronization process when a synchronization process proceeds after recovery of the fault.

Next, an instance will be described in which the intermediate storage subsystem 104c is determined to be accessible in the step 1302. Firstly, the secondary storage subsystem 104c checks the control information area 113 of intermediate storage subsystem 104c to examine whether requests not acquired by the secondary storage subsystem exist therein (1303). In the presence of a request in the intermediate storage subsystem, the secondary storage subsystem 104b acquires update requests from the queue area 114 and reflects data on the volume of secondary storage subsystem 104b on the basis of the acquired update request (1304). Then, the secondary storage subsystem 104b increments the head position of control information 107b by the amount of reflected update requests (1305) and again consults the control information area 113 of intermediate storage subsystem 104c to check the presence or absence of the next request (1306).

For checking the presence or absence of the next update request, methods can be considered including (1) one method in which after acquiring only a header portion of the update request and analyzing it, the secondary storage subsystem acquires data portion representing a main part of the update request and information and (2) the other method in which the secondary storage subsystem 104b acquires data from the update request by a constant size and analyzes it inside the secondary storage subsystem. In the present embodiment, a description will be given by using the method (1) but the present invention can be implemented with either method.

The secondary storage subsystem first acquires a header portion of the queue request and examines group ID, request ID and time stamp for remote copy. The secondary storage subsystem analyzes by using the group ID and queue ID whether there is any logical contradiction, checks by using the request ID whether the update request has a serial number next to that of the immediately preceding update request and examines the time stamp to check whether the time stamp has a larger value than that of the immediately preceding update request. If the result of the examination shows that there is no logical inconsistency, the secondary storage subsystem determines that the update request is present but in the case of the occurrence of logical inconsistency, nonexistence of the update request is determined.

In the presence of the update request, the secondary storage subsystem acquires, if possible, all update requests from the intermediate storage subsystem 104c and inspects each of the blocks and end information. If the inspection results are normal, the secondary storage subsystem reflects data on its volume (1307). When a fault occurs in the midst of transmission of the update request from the primary storage subsystem 104a to the intermediate storage subsystem 104c, there is a possibility that the last written update request suspends in the midst of write operation. Accordingly, each block and the end information are inspected to assure consistency of the update requests.

Subsequently, the secondary storage subsystem again increments the address (1305) so as to again check whether the next update request is present in the intermediate storage subsystem 104c (1306). The secondary storage subsystem repeats the process ranging from the step 1305 to the step 1307 until any update request does not exist in the intermediate storage subsystem.

The process as above will be described by making reference to Fig. 6. Firstly, the secondary storage subsystem 104b consults the control information 113 to collectively acquire Data3 and Data4 from the queue area 114 of intermediate storage subsystem in the step 1304. Thereafter, the secondary storage subsystem analyzes, in the steps 1305 to 1307, the header and end information of each update request in respect of Data5 and Data6 and if no logical inconsistency is found, it acquires Data5 and Data6. Then, when trying to acquire an update request next to Data6, the secondary storage subsystem finds inconsistency of information in any of header, data and end information and ends the acquisition of the update request.

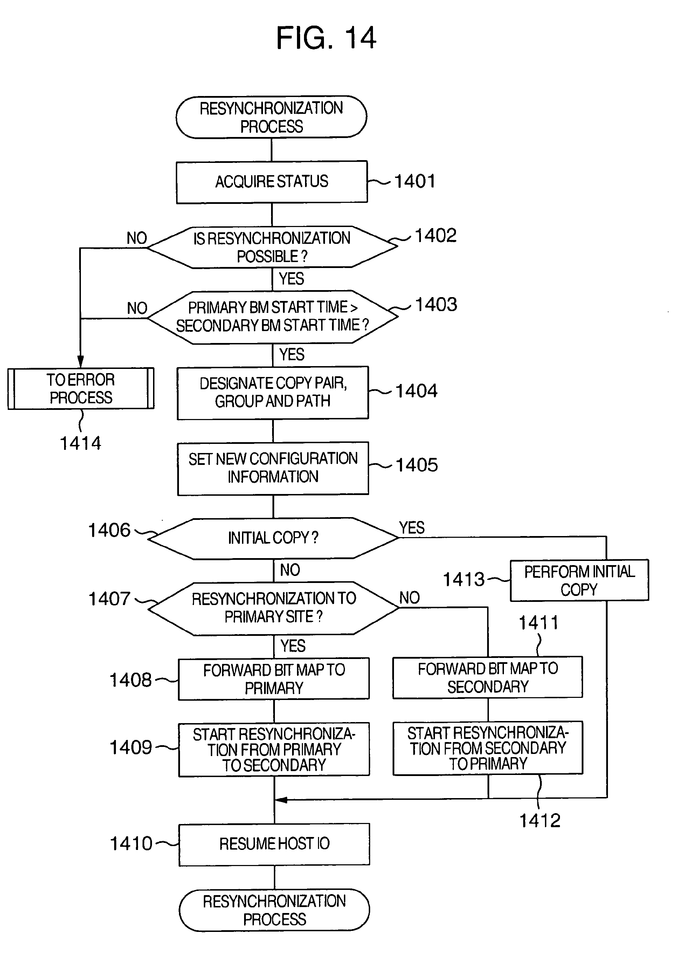

Referring now to Fig. 14, there is illustrated an example of a resynchronization process between the primary storage subsystem 104a and the secondary storage subsystem 104b.

Firstly, the manager uses the management console 117 to acquire the state of each unit and the connection state between the units so as to examine whether resynchronization is placed in permissible condition (1401). In the event that the resynchronization is placed in impermissible condition for the reasons that, for example, part of the path inside the data processing system and the storage subsystem 104 are not allowed for use (1402), an error process is executed (1414).

The manager also checks logical consistency of the data processing system by using the management console. The manager uses the management console to confirm if volumes belonging to the group of remote copy are usable in respect of all storage subsystems 104 and comparison of time for detection of a fault and comparison of time for start of bit map are made among individual groups and among individual volumes. By comparing times for start of bit maps used for the resynchronization process, the manager can confirm the logical consistency of the data processing system (1403).

Sometimes the secondary storage subsystem 104b fails to be stored with information equivalent or comparable to that in the primary storage subsystem 104a owing to such a situation as the case where, for example in the step 1302 of Fig. 13, the secondary storage subsystem is determined not to be permitted to access the intermediate storage subsystem (1310). Accordingly, as described above, the primary storage subsystem 104a needs to prepare a bit map in respect of an update request whose acquisition and processing by means of the secondary storage subsystem 104b are not confirmed.

For example, in the example of Fig. 6, the primary storage subsystem 104a must start acquisition of a bit map from Data1. In the event that a bit map is acquired starting with only the time for Data6 and ensuing data for reasons of some logical inconsistency, data inconsistency takes place when the resynchronization process proceeds between the primary and secondary storage subsystems. In this case, inconsistency takes place such that Data3, Data4, Data5 and Data6 cannot be resynchronized. In other words, when the bit map preparing time (difference information acquisition start time) of primary storage subsystem 104a is newer or later than that of secondary storage subsystem 104b (1403), inconsistency of data occurs and the error process is executed (1414).

When inconsistency of data is determined not to occur, the manager carries out the resynchronization process by first creating paths to bring the individual pairs for remote copy into resynchronization, on the basis of the status of the system acquired on the management console 117 (1404). At that time, it is not always necessary that the path be routed through the intermediate storage subsystem 104c and the primary storage subsystem 104a and the secondary storage subsystem 104b may be connected directly to each other.

Next, the manager prepares new configuration information 106 in the management console and the management console 117 transmits the new configuration information 106 to each storage subsystem 104 (1405). On the basis of the received new configuration information 106, each storage subsystem 104 tries to connect to a designated unit through a designated path.

Subsequently, it is determined whether or not resynchronization is necessary. In the event that a fault takes place in the primary storage subsystem 104a or secondary storage subsystem 104b and data is extinguished, the resynchronization is not performed and initial copy is carried out (1406, 1413).

In case the resynchronization is necessary, it is decided which one of the storage subsystems 104 the data contents should be synchronized (1407). When business affairs are temporarily transferred to the secondary storage subsystem 104b because of maintenance or when business affairs are transferred from the primary storage subsystem 104a to the secondary storage subsystem 104b because of the occurrence of a fault, resynchronization must be made from the secondary storage subsystem 104b to the primary storage subsystem 104a. Further, when because of the occurrence of a fault, update data is not reflected in the secondary storage subsystem and business affairs are continued in the primary storage subsystem 104a, resynchronization of data from the primary storage subsystem 104a to the secondary storage subsystem 104b is needed. In other words, the data contents is usually synchronized with the system side to which business affairs are transferred or the system side which has successively executed business affairs.

When resynchronization is made from the primary storage subsystem 104a to the secondary storage subsystem 104b, a bit map the secondary storage subsystem has is forwarded from the secondary storage subsystem 104b to the primary storage subsystem 104a (1408) and a bit map of the primary storage subsystem 104a and the bit map of the secondary storage subsystem 104b are consolidated in the primary storage subsystem 104a to create a bit map for resynchronization. Specifically, the consolidation of the bit maps can be achieved by calculating the logical sum (OR) of individual bits indicated on both the bit maps.

Then, in accordance with the bit map for resynchronization, update requests which have not yet been reflected on the secondary storage subsystem are transmitted from the primary storage subsystem to the secondary storage subsystem, thereby executing the resynchronization process (1409). To add, after start of resynchronization process, the storage subsystem 104 can resume a process for IO process request received from the host 102 even in the course of resynchronization by using a technique of "Copy on write", for instance (1410).

It will be appreciated that the resynchronization process from the secondary storage subsystem 104b to the primary storage subsystem 104a can be executed similarly to the resynchronization process from the primary storage subsystem to the secondary storage subsystem, with the only exception that the direction of forwarding of the bit map (1411) and the direction of transmission of the update request (1412) are reversed.

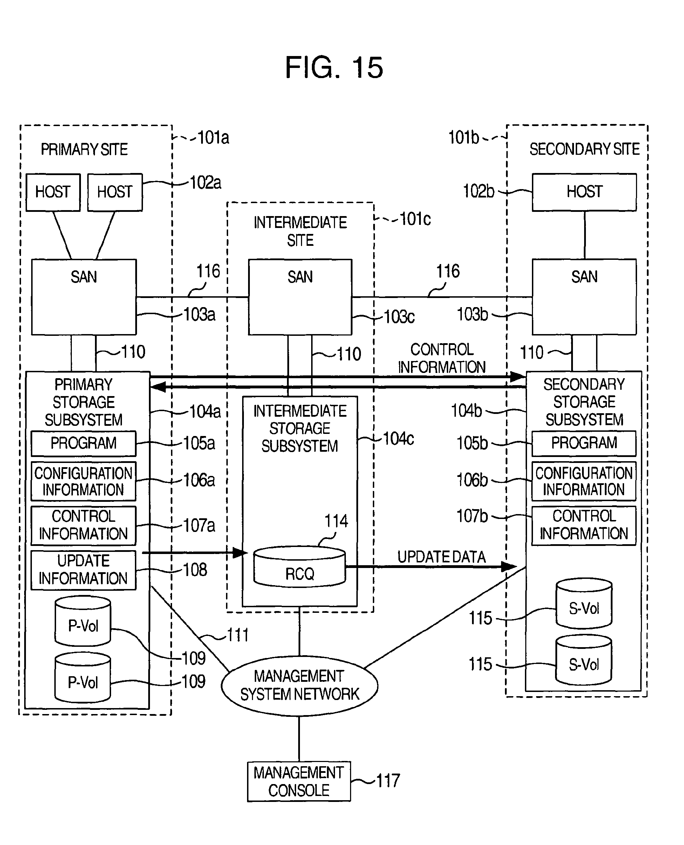

Referring to Fig. 15, another embodiment of the data processing system according to the invention will be described. In Fig. 15, a remote copy queue 114 exists on an intermediate storage subsystem 104c but configuration information 106 and control information 107 are not stored in the intermediate storage subsystem 104c. The configuration information 106 is forwarded from a management console 117 to primary and secondary storage subsystems. The control information 107 is exchanged directly between the primary storage subsystem 104a and the secondary storage subsystem 104b without being routed through the intermediate storage subsystem 104c.

Like the first embodiment, an update request is transmitted from the primary storage subsystem 104a to the intermediate storage subsystem 104c in synchronism with write of data from a primary host 102a to the primary storage subsystem 104a. On the other hand, the control information 107 is transmitted from the primary storage subsystem 104a directly to the secondary storage subsystem 104b asynchronously with a write request issued form the host 102. By consulting the received control information 107b, the secondary storage subsystem 104b acquires the update request from the intermediate storage subsystem 104c and stores write data acquired from the update request in a disk of secondary storage subsystem, thereby realizing remote copy.

By transmitting and receiving the control information directly between the primary and secondary storage subsystems 104a and 104b, the data consistency check and transmission delay necessarily caused by routing through the intermediate storage subsystem 104c can be reduced.

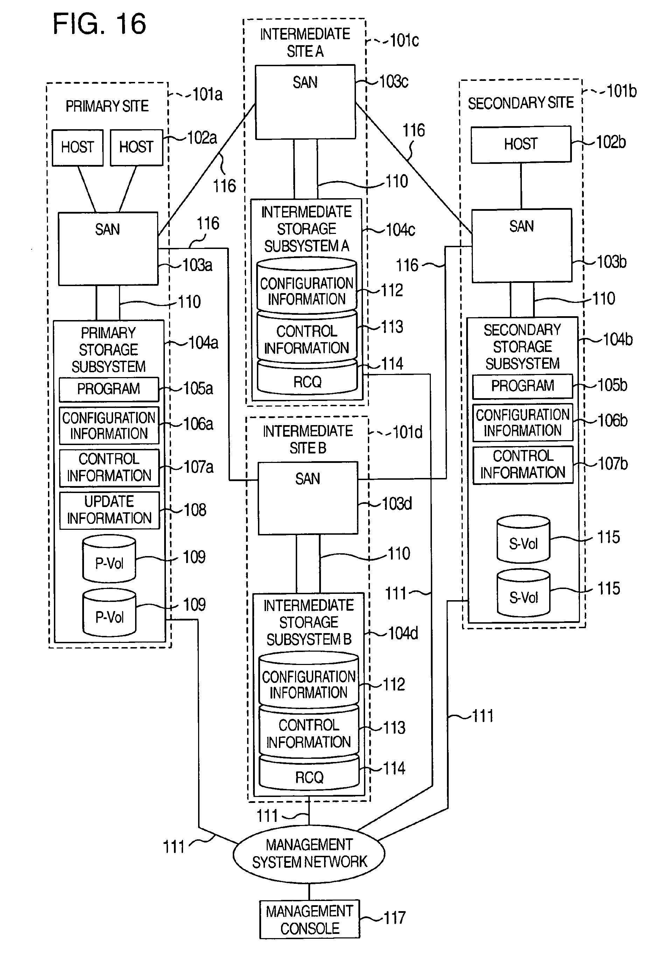

Referring to Fig. 16, a system having a plurality of intermediate storage subsystems 104 is exemplified as still another embodiment of the data processing system according to the invention. In the present embodiment, a plurality of intermediate sites 101 exist, including an intermediate site A and an intermediate site B. In the data processing system as shown in Fig. 16, there are two kinds of carrying-out modes in which (1) an intermediate storage subsystem 104 to be used is allotted to each remote copy group and (2) in a remote copy process for a desired remote copy group, a plurality of intermediate storage subsystems 104c and 104d are used.

In the case of mode (1), the process is similar to that in the first embodiment from the viewpoint of each remote copy group.

In the case of mode (2), a process is carried out in which the primary storage subsystem 104a transmits update requests distributively to the plurality of intermediate storage subsystems 104c and 104d. In this case, each update request has an ID which is a sole serial number through out the remote copy groups and intermediate storage subsystems 104c and 104d. The secondary storage subsystem 104b aligns the update requests acquired from the plurality of intermediate storage subsystems 104c and 104d and thereafter, reflects data on volumes of a disk device the own unit has in accordance with the update requests.

The present embodiment is characteristic of a fault coping process or a process during the occurrence of a fault. The plurality of intermediate storage subsystems 104c and 104d are provided in the present embodiment and therefore, even when any one of the storage subsystems 104 becomes faulty, the alternating path control can be accomplished by reconstructing the configuration information of the data processing system. In performing the alternating path control process, it is necessary that an update request stagnating on an intermediate storage subsystem 104 suffering from the occurrence of the fault be retransmitted from the primary storage subsystem to the secondary storage subsystem through the medium of a different indefectible intermediate storage subsystem 104. Since the update request to be retransmitted is one the primary storage subsystem has written to the intermediate storage subsystem in which the fault occurred, there is a possibility that an ID of the retransmitted update request is not contiguous to an ID of an update request the primary storage subsystem 104a transmitted immediately precedently to the intermediate storage subsystem. But, it does not matter if update requests acquired from the intermediate storage subsystem are aligned in order of request ID's on the secondary storage subsystem side and thereafter a process for storing data in the volumes is executed.

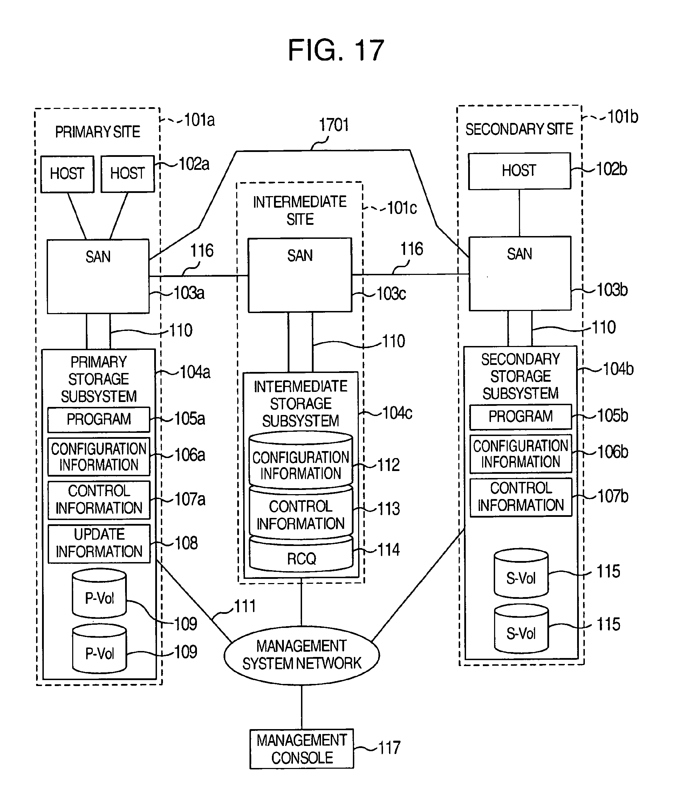

Referring to Fig. 17, there is illustrated still another embodiment of the data processing system according to the invention having an alternating path. In the system as shown in Fig. 17, a remote copy link 1701 for coupling a primary storage subsystem 104a and a secondary storage subsystem 104b is provided. The remote copy link 1701 is usable as (1) an alternating path for remote copy when an intermediate storage subsystem 104c becomes faulty or (2) as a path for control information communication.
(1) In the event that a fault occurs in the intermediate storage subsystem 104c and remote copy cannot be executed through the medium of the intermediate storage subsystem, the primary and secondary storage subsystems can execute remote copy by using the remote copy link 1701 instead. When the remote copy link 1701 is used as the alternating path during the occurrence of a fault, asynchronous remote copy is used because the distance between the primary storage subsystem 104a and secondary storage subsystem 104b is long.
(2) During normal operation, control information 107 can be transmitted/received through asynchronous communication by using the remote copy link 1701. More specifically, the control information 107 can be forwarded from the primary storage subsystem 104a to the secondary storage subsystem 104b by using the remote copy link 1701. Also, messages other than data concerning update requests can be transmitted/received asynchronously between the primary and secondary storage subsystems by using the remote copy link 1701. By making communication between the primary storage subsystem 104a and the secondary storage subsystem 104b directly without routing through the intermediate storage subsystem, the data consistency check and transmission delay necessarily caused by routing through the intermediate storage subsystem 104c can be reduced.

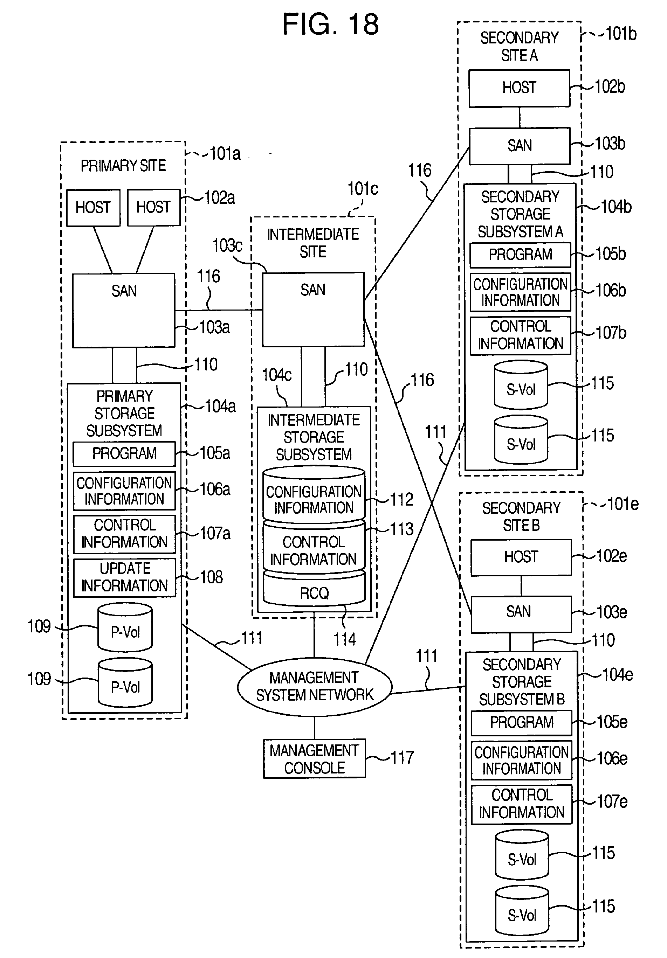

Referring now to Fig. 18, there is illustrated yet still another embodiment of the data processing system according to the invention having a plurality of secondary storage subsystems 104. When the plurality of secondary storage subsystems 104b and 104e are provided, configuration information 106 and control information 107 are also needed for each of the plurality of secondary storage subsystems 104b and 104e.

More particularly, one to plurality control is needed for update requests transmitted from a primary storage subsystem 104a to the secondary storage subsystems 104b and 104e through an intermediate storage subsystem, and secondary control information 632 and secondary information 612 stored in the intermediate storage subsystem are needed by the number of secondary storage subsystems 104.

The secondary storage subsystem 104 performs control similar to that in the first embodiment. The process as shown in Fig. 10 to be executed on the primary storage subsystem 104a is changed. The primary storage subsystem 104a acquires secondary control information 632 of the plurality of secondary storage subsystems 104b and 104e and in process 1003, compares pieces of secondary control information 632 of all secondary storage subsystems 104b and 104e with each other. The head position of a secondary storage subsystem 104 for which the update is determined to be the most retarded (oldest) as a result of comparison is used as a new head position to prepare new control information 107a. During the occurrence of a fault, too, the primary storage subsystem proceeds with the process similarly to cause the difference information acquisition start time to meet the secondary storage subsystem 104 for which the update is the most retarded, in bit map creation of the step 1107. Through this, effective difference information can be held between the primary storage subsystem 104a and the secondary storage subsystems 104b and 104e.

The update requests are transmitted from the secondary storage subsystems 104 to the primary storage subsystem 104a in one-to-one correspondence relation and hence control operation similar to that in the first embodiment is executed.

As described above, in order to reduce the cost in the remote copy process executed between n sites and reduce the complexity of the process, the ordinary intermediate storage subsystem for practicing the I/O process is arranged in the intermediate site for connecting the primary and secondary storage subsystems and a process related to remote copy is carried out by the primary storage subsystem at primary site and the secondary storage subsystem at secondary site. In other words, the intermediate storage subsystem is an ordinary storage subsystem for executing a read or write process in accordance with an I/O request from the primary or secondary storage subsystem during the remote copy process.

With the above construction, the primary and secondary storage subsystems execute the remote copy process through the intermediate storage subsystem. By reading/writing data and messages from/to the remote copy queue 114 inside the intermediate storage subsystem, the primary and secondary storage subsystems exchange the data and messages therebetween.

When receiving a write request and write data from the host, the primary storage subsystem transmits an update request having the write data and control information contained in the write request, such as a storage position of the write data, to the intermediate storage subsystem and thereafter returns a response to the host (synchronous remote copy). Besides, the primary storage subsystem also transmits to the intermediate storage subsystem the queue control information including a pointer such as head position indicative of progress of the remote copy queue 114 and a size of the update request. The control information can be updated either synchronously or asynchronously with the write request by the host but preferably the update may be carried out asynchronously at intervals of constant times for the purpose of improving the performance. It is to be noted that the primary and secondary storage subsystems may be connected directly to each other so as to exchange the control information directly between them without routing through the intermediate storage subsystem.

The secondary storage subsystem at the secondary site reads the primary control information written to the intermediate storage subsystem and acquires update requests including write data from the queue on the intermediate storage subsystem on the basis of the primary control information. To add, the secondary storage subsystem acquires the update requests asynchronously with transmission of the update requests from the primary storage subsystem to the intermediate storage subsystem (asynchronous remote copy). Then, on the basis of position information contained in the acquired update requests, the secondary storage subsystem stores write data contained in the acquired update requests into the disk inside the secondary storage subsystem.

In the process as above, exchange of the update request and control information is done by causing the primary storage subsystem and secondary storage subsystem to issue a command for read or write to the intermediate storage subsystem and causing the intermediate storage subsystem to execute a read or write process in accordance with the issued command. Accordingly, the intermediate storage subsystem does not require functions and programs concerning the remote copy, so that the n-site remote copy can be implemented at low costs. By using a more compact storage subsystem or JBOD (Just a Bunch of Service), further inexpensiveness can be assured.

Also, the intermediate storage subsystem requires the storage area for storing the update requests and control information but it need not keep holding copies of data the primary and secondary storage subsystems have and therefore the storage capacity necessary for the intermediate storage subsystem can be less than that of the primary or secondary storage subsystem. Accordingly, with less storage capacity, the remote copy process can be executed between n sites.

Further, the intermediate storage subsystem must, in general, execute a remote copy process between it and each of the primary and secondary storage subsystems and is imposed with a heavy process load but in the embodiments of the invention, the process to be executed by the intermediate storage subsystem is simplified and it suffices that the intermediate storage subsystem processes the I/O request issued from the primary or secondary storage subsystem and hence the load on the intermediate storage subsystem can be reduced. Furthermore, such a process as checking the progress of remote copy and status thereof is not necessary for the intermediate storage subsystem to execute and therefore, the monitor/management process required for the remote copy can be alleviated.

According to the invention, the remote copy between n sites can be executed at low costs. Besides, according to the invention, the load and capacity necessary for the process of executing the remote copy between n sites can be reduced.

It should be further understood by those skilled in the art that although the foregoing description has been made on embodiments of the invention, the invention is not limited thereto and various changes and modifications may be made without departing from the spirit of the invention and the scope of the appended claims.

## Claims

1. A system comprising:
a first storage unit system (104a) connected to a computer (102a) and having a first disk device (210a) and a first controller (201a);
a second storage unit system (104b) having a second disk device (210b) and a second controller (201b); and
a third storage unit system (104c) connected to said first storage unit system and said second storage unit system and having a third storage area and a third controller (201c),
wherein said first controller (201a) responds to a write request received from said computer (102a) to transmit to said third storage unit system a journal including write data received from said computer and address information indicative of a position at which said write data is written,
stores said write data in said first disk device (210a), and
returns a response to said write request to said computer (102a) after transmitting said journal, and
wherein said second controller (201b) receives first control information (107a) issued by said first controller (201a) and including a storage position of said journal used when said second storage unit system acquires said journal,
acquires said journal from said third storage unit system (104c) on the basis of said first control information (107a), and
stores said write data in said second disk device (210b) on the basis of the address information included in said journal.

2. A system according to claim 1,
wherein said first storage unit system (104a) stores said first control information (107a);
wherein said second controller (201b) acquires said journal and thereafter issues second control information (107b) indicative of the acquisition of said journal; and
wherein said first controller (201a) acquires said second control information (107b) and thereafter makes said first control information (107a) stored in said first storage unit system ready to be discarded.

3. A system according to claim 2,
wherein said first controller (201a) transmits said first control information (107a) to said third storage unit system (104c) and said second controller (201b) acquires said first control information (107a) stored in said third storage area (113) from said third storage unit system (104c); and
wherein said second controller (201b) transmits said second control information to said third storage unit system and said first controller (201a) acquires said second control information stored in said third storage area (113) from said third storage unit system (104c).

4. A system according to claim 3,
wherein said third storage unit system stores said first control information and said second control information in different logical volumes inside said third storage area, respectively, and makes such setting that a write request from either of said first and second storage unit systems (104a, 104b) is to be permitted in respect of each logical volume.

5. A system according to claim 3,
wherein in the event that a fault takes place in said first storage unit system, said second storage unit system consults the first control information (107a) stored in said third storage unit system to acquire a journal having write data not stored in said second disk device (201b) from said third storage unit system, and stores write data included in the acquired journal in said second disk device (210b) on the basis of address information included in said acquired journal.

6. A system according to claim 5,
wherein when receiving a write request from a computer (102b) connected to said second storage unit system after a fault takes place in said first storage unit system, said second storage unit system (104b) has difference information indicative of a storage position of write data written in accordance with said write request; and
wherein when said first storage unit system recovers from the fault, said second storage unit system transmits the data stored at the storage position indicated by said difference information to said first storage unit system through a communication path (116) connecting said first storage unit system and said second storage unit system.

7. A system according to claim 2 further comprising a communication path (1701) connected to said first storage unit system and said second storage unit system,
wherein said first controller (201a) transmits said first control information (107a) to said second storage unit system through said communication path (1701); and
wherein said second controller transmits said second control information (107b) to said first storage unit system through said communication path (1701).

8. A system according to claim 7,
wherein when a fault takes place in said third storage unit system (104c), said first controller (201a) transmits write data received from said computer (102a) to said second controller (201b) through said communication path (1701), and said second controller stores the write data received through said communication path (1701) in said second disk device (210b).

9. A system according to claim 3 further comprising a fourth storage unit system (104d) connected to said first storage unit system (104a) and said second storage unit system (104b),
wherein when a fault takes place in said third storage unit system, said first storage unit system and said second storage unit system transmit/receive therebetween a journal, first control information (107a) and second control information (107b) through said fourth storage unit system (104d).

10. A system according to claim 3 further comprising a fourth storage unit system (104d) connected to said first storage unit system and said second storage unit system,
wherein said first controller (201a) transmits a journal having time information to either of said third storage unit system and said fourth storage unit system; and
wherein said second controller (201b) acquires the journal from said third storage unit system or said fourth storage unit system and writes write data included in the acquired journal to said second disk device (210b) in order of times indicated by the time information assigned to said journal.

11. A remote copy method for use in a system having a first storage unit system (104a) connected to a computer (102a) and having a first disk device (210a), a second storage unit system (104b) having a second disk device (210b) and a third storage unit system (104c) connected to said first storage unit system and said second storage unit system, said method being executed among said first storage unit system, second storage unit system and third storage unit system and comprising:
a write request receiving step of causing said first storage unit system to receive a write request and write data from said computer (102a);
a journal writing step of causing said first storage unit system to write a journal having said write data and address information included in said write request to said third storage unit system;
a first control information issuing step of causing said first storage unit system to issue first control information (107a) including a storage position of said journal necessary for said second storage unit system to read said journal;
a first control information acquiring step of causing said second storage unit system to acquire said first control information;
a journal reading step of causing said second storage unit system to read said journal on the basis of said first control information; and
a write data writing step of causing said second storage unit system to store the write data included in said journal in a disk device (210b) owned by said second storage unit system in accordance with the address information included in said journal.

12. A remote copy method according to claim 11,
wherein said first storage unit system stores said first control information,
said method further comprising:
a second control information issuing step of causing said second storage unit system to issue, after said journal reading step, second control information (107b) indicating that said second storage unit system reads said journal; and
a second control information receiving step of causing said first storage unit system to receive said second control information,
wherein said first storage unit system discards said first control information after receiving said second control information.

13. A remote control method according to claim 11,
wherein said first control information issuing step has a step of writing said first control information into said third storage unit system; and
wherein said first control information acquiring step has a step of reading said first control information from said third storage unit system.

14. A remote copy method according to claim 13,
wherein said third storage unit system stores said first control information and said second control information in different logical volumes inside a third storage area (113), respectively, and makes such setting that a write request from either of said first and second storage unit systems is to be permitted in respect of each logical volume.

15. A remote copy method according to claim 13 further comprising:
a step of causing, in the event that a fault takes place in said first storage unit system, said second storage unit system to acquire from said third storage unit system a journal having write data not stored in said disk device (210b) owned by said second storage unit system by consulting said first control information stored in said third storage unit system; and
a step of causing said second storage unit system to store, on the basis of address information included in the acquired journal, write data included in said acquired journal in said disk device (210b) said second storage unit system has.

16. A remote copy method according to claim 15 further comprising:
a step of causing said second storage unit system (104b) to receive a write request from a computer (102b) connected to said second storage unit system in the event that a fault takes place in said first storage unit system (104a);
a step of causing said second storage unit system to hold difference information indicative of a storage position of write data written in accordance with said write request; and
a step of causing, when aid first storage unit system recovers from the fault, said second storage unit system to transmit the data stored at the storage position indicated by said difference information to said first storage unit system through a communication path (116) connecting said first storage unit system and said second storage unit system.

17. A remote copy method according to claim 11,
wherein said first storage unit system and said second storage unit system are connected to each other by a communication path (1701);
wherein said first control information issuing step has a step of causing said first storage unit system to transmit said first control information (107a) to said second storage unit system through said communication path (1701); and
wherein said first control information acquiring step has a step of causing said second storage unit system to receive said first control information from said first storage unit system through said communication path (1701).

18. A remote copy method according to claim 17 further comprising, when a fault takes place in said third storage unit system:
a step of causing said first storage unit system to transmit write data received from said computer (102a) to said second storage unit system through said communication path (1701); and
a step of causing said second storage unit system to store the write data received via said communication path (1701) in said disk device (210b) said second storage unit system has.

19. A remote copy method according to claim 13,
wherein said system further comprises a fourth storage unit system (104d) connected to said first storage unit system (104a) and said second storage unit system (104b) ; and
wherein when a fault takes place in said third storage unit system (104c), said first and second storage unit systems transmit/receive a journal and first control information therebetween through said fourth storage unit system (104d).

20. A remote copy method according to claim 13,
wherein said system further comprises a fourth storage unit system (104d) connected to said first storage unit system and said second storage unit system;
wherein said journal writing step has a step of causing said first storage unit system to write a journal having time information to either of said third and fourth storage unit systems; and
wherein said second controller (201b) acquires the journal from said third and fourth storage unit systems and writes write data contained in the acquired journal to said second disk device in order of times indicated by said time information assigned to said journal.
